# EUROPEAN PATENT APPLICATION

(11) **EP 2 273 807 A1**
(43) Date of publication of application: **12.01.2011**
(21) Application number: 09793816.1
(22) Date of filing: 24.06.2009
(51) Int. Cl.: H04W 8/22, H04W 8/18

(54) **METHOD, SYSTEM, SERVER AND CLIENT FOR IMPLEMENTING RELATIVE CONDITION EVALUATION**

(30) Priority: 07.07.2008 CN 200810130557
(71) Applicant: Huawei Technologies Co., Ltd., Longgang District, Shenzhen Guangdong 518129 (CN)
(72) Inventor: DENG, Rong c/o Huawei Technologies Co.Ltd., Int.Prop.Dept., Shenzhen (CN); SUN, Qian c/o Huawei Technologies Co.Ltd., Int.Prop.Dept., Shenzhen (CN)
(74) Representative: Kreuz, Georg Maria
(86) International application number: PCT/CN2009/072425
(87) International publication number: WO 2010/003341

(57) **Abstract**

A method, a system, a server, and a client for implementing relative condition evaluation are provided. The method includes the following steps. An evaluation request message is received, in which the evaluation request message includes information related to relative condition evaluation. A relative evaluation condition and a reference object in the relative evaluation condition are acquired according to the evaluation request message. Required information for relative condition evaluation is acquired from a related information source according to the evaluation request message. Evaluation results are acquired and sent according to the required information for relative condition evaluation. Thus, the information related to the reference object serves as a basis for evaluation, and an evaluation requestor does not need to designate a certain status of an evaluation object to satisfy a fixed value, such that the evaluation is performed according to a status of the reference object.

## Description

The application claims the benefit of priority to China Patent Application No. 200810130557.1, filed on July 7, 2008, and entitled "METHOD, SYSTEM, SERVER AND CLIENT FOR IMPLEMENTING RELATIVE CONDITION EVALUATION", which is incorporated herein by reference in its entirety.

### FIELD OF THE TECHNOLOGY

The present invention relates to the field of communications, and more particularly to a method, a system, a server, and a client for implementing relative condition evaluation.

### BACKGROUND OF THE INVENTION

Before initiating a service, in order to know whether a current service recipient is suitable to participate in the service, a user or a certain application may evaluate a current status of the service recipient, thereby improving service initiating efficiency, and avoiding waste of communication resources. A condition based uniform resource identifications selection (CBUS) service aims to provide an evaluation function, and is capable of providing an object satisfying a relative evaluation condition according to demands of an evaluation requestor.

Taking a service of establishing a group session as an example, a method for establishing a group session includes the following steps. A service server receives a group session request, and acquires a group member list and a session establishing condition according to information in the group session request. The service server acquires information related to the session establishing condition of group members, and determines whether the acquired information satisfies the session establishing condition. The service server initiates a group session establishing request to a client of the group member satisfying the session establishing condition, and establishes the group session. The relative evaluation condition in the prior art is as shown in the following.

```
        < condition-set > "the element represents that the following is the
   evaluation condition"
         < profile-condition > "the element represents the evaluation condition based on
    user basic information"
            < gender > female < / gender > "representing that the gender is female"
            < hobbies > football < / hobbies > "representing that the hobby is football"
        < / profile -condition >
        < dynamiclnfo-condition > "representing that the following is the evaluation
   condition based on dynamic information"
        < presence > "representing the evaluation condition based on presence
   information"
          < mood > happy < / mood > "representing that the mood is happy"

        < / presence >
        < location > "representing the evaluation condition based on location
   information"
          < geography-location > shenzhen < / geography-location >
           "representing that the geography location is shenzhen"
        < /location >
      < / condition-set >
```

In the implementation of the present invention, the inventors found that the prior art at least has the following problems. In the prior art, only information of an evaluation object is evaluated, that is, the evaluation requestor needs to designate a certain status of the evaluation object to satisfy a fixed value. If the evaluation requestor fails to designate the fixed value or intends to perform the evaluation according to a status of a certain reference object, or the relative evaluation condition is dynamically changed, the evaluation cannot be implemented in the prior art.

### SUMMARY OF THE INVENTION

The present invention is directed to a method, a system, a server, and a client for implementing relative condition evaluation, through which the evaluation may be performed according to a status of a reference object when an evaluation requestor does not designate a certain status of an evaluation object to satisfy a fixed value.

In an embodiment, the present invention provides a method for implementing relative condition evaluation, which includes the following steps.

An evaluation request message is received, in which the evaluation request message includes information related to relative condition evaluation.

A relative evaluation condition and a reference object in the relative evaluation condition are acquired according to the evaluation request message.

Required information for relative condition evaluation is acquired from a related information source according to the evaluation request message.

Evaluation results are acquired and sent according to the required information for relative condition evaluation.

In an embodiment, the present invention provides a system for implementing relative condition evaluation, which includes a client and a server.

The client is adapted to send an evaluation request message, and receive evaluation results returned by the server according to the evaluation request message, in which the evaluation request message includes information related to relative condition evaluation, and the information related to relative condition evaluation includes a relative evaluation condition or reference path information.

The server is adapted to acquire the relative evaluation condition and a reference object in the relative evaluation condition according to the received evaluation request message, acquire required information for relative condition evaluation from a related information source; and acquire the evaluation results according to the required information for relative condition evaluation and send the evaluation results to the client.

In an embodiment, the present invention provides a client, which includes a second sending module and a second receiving module.

The second sending module is adapted to send an evaluation request message to a server, in which the evaluation request message includes information related to relative condition evaluation, and the information related to relative condition evaluation includes a relative evaluation condition or reference path information.

The second receiving module is adapted to receive evaluation results returned by the server according to the evaluation request message.

In an embodiment, the present invention provides a server, which includes a first receiving module, a condition acquiring module, an information acquiring module, and a processing/sending module.

The first receiving module is adapted to receive an evaluation request message, in which the evaluation request message includes information related to relative condition evaluation.

The condition acquiring module is adapted to acquire a relative evaluation condition and a reference object in the relative evaluation condition according to the evaluation request message.

The information acquiring module is adapted to acquire required information for relative condition evaluation from a related information source according to the evaluation request message.

The processing/sending module is adapted to acquire evaluation results according to the required information for relative condition evaluation and send the evaluation results.

In the embodiments of the present invention, the relative evaluation condition is acquired, and the relative evaluation condition designates the reference object, such that the information related to the reference object serves as a basis for evaluation, and the evaluation is performed according to the status of the reference object.

### BRIEF DESCRIPTION OF THE DRAWINGS

FIG. 1 is a flow chart of a method for implementing relative condition evaluation according to embodiment one of the present invention;
FIG. 2 is a signaling flow chart of a method for implementing relative condition evaluation according to embodiment two of the present invention;
FIG. 3 is a signaling flow chart of a first situation of a method for implementing relative condition evaluation according to embodiment three of the present invention;
FIG. 4 is a signaling flow chart of a method for implementing relative condition evaluation according to embodiment four of the present invention;
FIG. 5 is a signaling flow chart of a method for implementing relative condition evaluation according to embodiment five of the present invention;
FIG. 6 is a signaling flow chart of a method for implementing relative condition evaluation according to embodiment six of the present invention;
FIG. 7 is a signaling flow chart of a method for implementing relative condition evaluation according to embodiment seven of the present invention;
FIG. 8 is a signaling flow chart of a method for implementing relative condition evaluation according to embodiment eight of the present invention;
FIG. 9 is a schematic structural view of a system for implementing relative condition evaluation according to an embodiment of the present invention;
FIG. 10 is a schematic structural view of a client according to an embodiment of the present invention; and
FIG. 11 is a schematic structural view of a server according to an embodiment of the present invention.

### DETAILED DESCRIPTION OF THE EMBODIMENTS

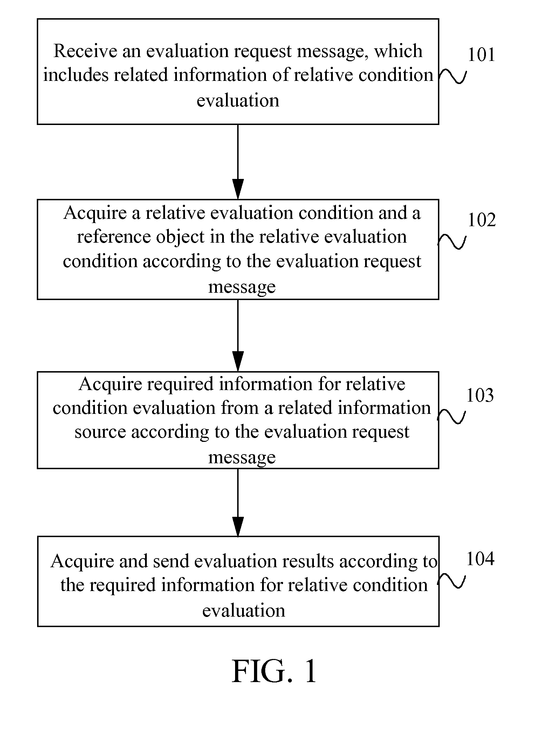

FIG. 1 is a flow chart of a method for implementing relative condition evaluation according to embodiment one of the present invention. Referring to FIG. 1, the method of this embodiment specifically includes the following steps.

In Step 101, an evaluation request message is received, in which the evaluation request message includes information related to relative condition evaluation.

In Step 102, a relative evaluation condition and a reference object in the relative evaluation condition are acquired according to the evaluation request message.

In Step 103, required information for relative condition evaluation is acquired from a related information source according to the evaluation request message.

In Step 104, evaluation results are acquired and sent according to the required information for relative condition evaluation.

Further, the information related to relative condition evaluation in Step 101 may be the relative evaluation condition, that is, the relative evaluation condition is encapsulated in the evaluation request message, and thus, in Step 102, specifically, the evaluation request message is parsed, and the relative evaluation condition and the reference object designated in the relative evaluation condition are acquired.

The information related to relative condition evaluation in Step 101 may also be reference path information, which indicates a storage location of the relative evaluation condition, and thus, before Step 101, the relative evaluation condition is stored at the storage location. In Step 102, specifically, the relative evaluation condition and the reference object designated in the relative evaluation condition are acquired from the storage location corresponding to the reference path information. Specifically, the relative evaluation condition may be pre-defined. A user or an application stores the pre-defined relative evaluation condition at the specific storage location, for example, a shared extensible markup language data management server (XDMS), or a storage space in a CBUS server. In this manner, when initiating an evaluation request, the user or the application needs to designate a reference path of the relative evaluation condition.

In this embodiment, the relative evaluation condition is acquired, and the relative evaluation condition designates the reference object of the relative condition evaluation, such that the information related to the reference object serves as a basis for evaluation, and the relative condition evaluation is performed according to a status of the reference object. Further, in this embodiment, the pre-defined relative evaluation condition may be stored at a specific storage location, and the relative evaluation condition may not be carried in the evaluation request message, thereby improving the evaluation efficiency.

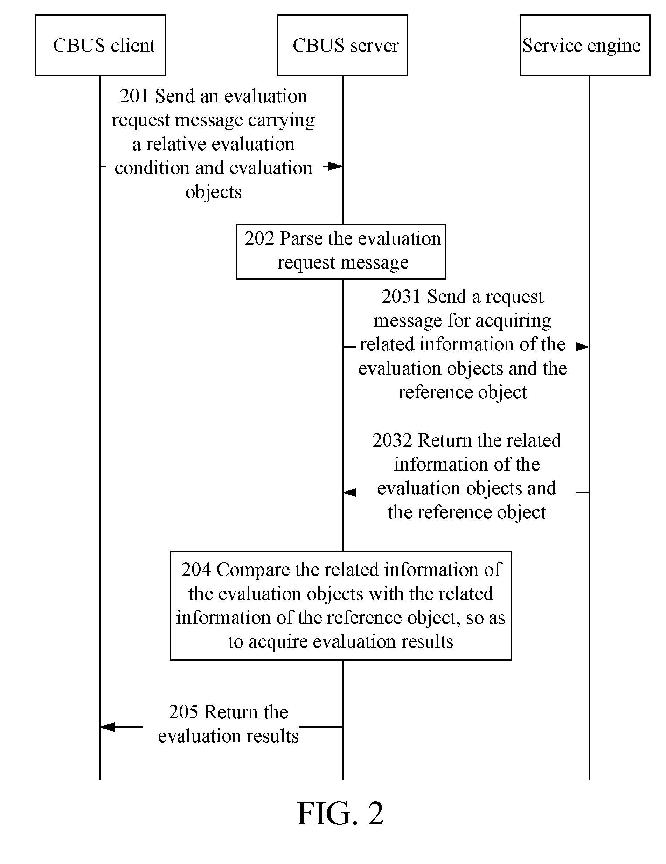

FIG. 2 is a signaling flow chart of a method for implementing relative condition evaluation according to embodiment two of the present invention. In this embodiment, a CBUS service is taken as an example, in which involved devices include a CBUS client, a CBUS server, and a related service engine. As shown in FIG. 2, the method of this embodiment specifically includes the following steps.

In Step 201, the CBUS client sends an evaluation request message to the CBUS server. The evaluation request message includes a relative evaluation condition and a reference object designated in the relative evaluation condition, and further includes evaluation objects and/or an evaluation setting, in which the evaluation objects and the evaluation setting may be optional information.

The relative evaluation condition may be the following two examples. In one example, the relative evaluation condition only includes a relative condition, and in the other example, the relative evaluation condition includes a combination of the relative condition and the conditions of the evaluation objects. Further, the CBUS server mainly performs the evaluation according to location information, presence information, and information in a shared XDMS of the evaluation objects, such that the relative evaluation condition may be represented by parts corresponding to one or more of the three types of information. In addition, the relative evaluation condition indicates that the CBUS server should compare information of the evaluation objects with information of the reference object, such that the relative evaluation condition designates the reference object. That is, the reference object is contained in the relative evaluation condition.

The reference object may be an evaluation request initiator, or others designated by the evaluation request initiator. The number of the reference object may be one or more. During the evaluation procedure, the reference object may be fixed, or may be changed, for example, the CBUS server dynamically selects different reference objects under different conditions according to a pre-setting of the CBUS client.

The evaluation object may be a single user, a plurality of users (for example, a certain group), or use the group as a unit (for example, a plurality of groups). The CBUS service supports a group selection function, evaluates the plurality of groups designated by the evaluation requestor, and selects the group satisfying the relative evaluation condition.

The evaluation setting mainly includes once evaluation, realtime evaluation, end evaluation (the evaluation is ended when an evaluated object satisfies the relative evaluation condition), and other manners. In addition, the CBUS also supports the CBUS client to set upper and lower limits of the number of evaluation results returned by the CBUS server according to self demands, for example, if the number of the current evaluation objects satisfying the relative evaluation condition does not reach the lower limit, the CBUS server continues to perform the evaluation, until the number reaches the lower limit, and returns the evaluation results, in which the number of the results returned by the CBUS server does not exceed the upper limit.

In the step, the CBUS client may send the evaluation request message to the CBUS server through a policy evaluation, enforcement and management (PEEM) callable interface (hereafter referred to as PEM-1). Further, in this embodiment, interaction between the CBUS client and the CBUS server may be implemented through the PEM-1 interface. Specifically, the PEEM is a framework that implements resource protection and management by evaluating, enforcing, and managing policies in preference settings of a terminal user, set by an operator, and designated by a service provider and an application developer, in which an interface PEM-1 is defined for policy evaluation. When policy processing resources are requested from the PEEM through the PEM-1 interface, due to differences of various resources, the corresponding policies are different, such that PEM-1 input information and output information are different, and input parameters and output parameters are also different. The PEM-1 is a universal interface, and it is impossible to set different independent interfaces for different policies, such that the problem may be solved through a PEM-1 template, that is, requesting and responding structures are specified. In the PEM-1 template, it is defined which input PEM-1 parameters adapted to process the policy may be provided by the evaluation requestor, and which output PEM-1 parameters may be generated for the evaluation requestor after the policy is processed, that is, basic input and output parameters are defined, and it is supported that the parameters are extended according to specific demands. Optionally, in this embodiment, the interface may be re-used, and interaction between the CBUS client and the CBUS server is implemented by extending input and output template parameters of the PEM-1 interface.

In Step 202, the CBUS server parses the evaluation request message, acquires the relative evaluation condition and the reference object designated in the relative evaluation condition, and further acquires the evaluation objects and the evaluation setting.

Optionally, the evaluation request message in Step 201 may include reference path information, which indicates a storage location of the relative evaluation condition, and thus, before Step 201, the relative evaluation condition is stored at the storage location. In Step 202, specifically, the relative evaluation condition and the reference object designated in the relative evaluation condition are acquired from the storage location corresponding to the reference path information, and optionally, the evaluation objects and the evaluation setting may also be acquired. Specifically, the relative evaluation condition, the evaluation objects, and/or the evaluation setting may be pre-defined, a user or an application stores the pre-defined relative evaluation condition, evaluation objects, and/or evaluation setting at the specific storage location, for example, a shared XDMS, or a storage space in the CBUS server, and in this manner, when initiating an evaluation request, the user or the application only needs to designate a reference path.

In Step 203, the CBUS server acquires information related to the evaluation objects and information related to the reference object, which specifically includes the following steps.

In Step 2031, the CBUS server sends a request message for acquiring the information related to the evaluation objects and the reference object to an information source (specifically being a service engine in this embodiment), in which the request message may carry identity information of the evaluation request initiator.

In the embodiment of the present invention, the service engine includes, but is not limited to, a location engine, a presence engine, and a shared XDMS engine.

Further, the CBUS server may acquire the information related to the evaluation objects and the reference object from the same information source according to the relative evaluation condition, or may acquire the information related to the evaluation objects and the reference object from different information sources.

In Step 2032, the service engine returns the information related to the evaluation objects and the reference object to the CBUS server.

Between Step 2031 and Step 2032, the service engine performs identity verification on the evaluation request initiator according to the identity information of the evaluation request initiator. Specifically, when receiving the request message for acquiring the information related to the evaluation objects and the reference object sent by the CBUS server, the service engine (for example, the presence engine or the location engine) may authenticate the evaluation request initiator (being the CBUS client in this embodiment). If the CBUS server implements interaction with the service engine through an SIP protocol, for example, acquires the presence information through an SIP subscription notification mechanism, two header fields being Identity and Identity-Info representing the identity information of the evaluation request initiator are carried in the request message sent to the service engine, so as to indicate the identity information of the evaluation request initiator, in which the Identity field is adapted for signature of the identity verification, and the Identity-Info is a reference of signer certificate. If the CBUS server implements the interaction with the service engine through other protocols, for example, interacts with the location engine through an HTTP protocol to acquire the location information, fields having the same function as the Identity and the Identity-Info in the SIP protocol are extended in the protocol, so as to carry the identity information of the evaluation request initiator. According to the identity information of the evaluation request initiator, the service engine performs the identity verification on the evaluation request initiator.

In Step 204, the CBUS server compares the information related to the evaluation objects with the information related to the reference object according to the relative evaluation condition and the evaluation setting, so as to acquire the evaluation results.

In Step 205, the CBUS server returns the evaluation results to the CBUS client.

In the embodiment, the relative evaluation condition includes the relative condition. If the relative evaluation condition includes a combination of the relative condition and the condition of the evaluation objects, in other words the relative evaluation condition includes a first evaluation condition and a second evaluation condition, in which the first evaluation condition is the relative condition, the second evaluation condition is the condition of the evaluation objects, and it is designated in the condition of the evaluation object that if a certain status of the evaluation object satisfies a fixed value, Step 204 and Step 205 specifically include the following steps.

The CBUS server compares the information related to the evaluation objects with the information related to the reference object according to the relative condition, and acquires a first evaluation object satisfying the relative condition.

The CBUS server acquires information related to the first evaluation object from the related information source (specifically being the service engine in this embodiment), for example, acquires presence information of the first evaluation object from a presence server.

The CBUS server compares the information related to the first evaluation object with a condition for a evaluation object, i.e. the second evaluation condition, and further selects a second evaluation object satisfying the condition for the evaluation object.

The CBUS server returns the second evaluation object to the CBUS client as the evaluation result.

In this embodiment, the evaluation object satisfying the condition for the evaluation object i.e. the second evaluation condition may be firstly selected, and then the evaluation object satisfying the relative condition i.e. the first evaluation condition is further selected. In other words, under the situation that the relative evaluation condition is a combination of the relative condition and the conditions of the evaluation objects, the sequence for evaluating the two evaluation conditions is not limited in this embodiment.

In this embodiment, the evaluation request message designates the reference object and the relative evaluation condition, and further includes the evaluation setting and the evaluation objects. The information related to the reference object acquired from the service engine serves as a basis for evaluation, and when the relative evaluation condition is the relative condition, the evaluation requestor does not need to designate a certain status of the evaluation object to satisfy a fixed value, such that the evaluation is performed according to a status of the reference object; and when the relative evaluation condition is a combination of the relative condition and the conditions of the evaluation objects, the evaluation objects satisfying the two conditions are selected in sequence, such that the relative condition evaluation is more flexible. Further, in this embodiment, the pre-defined relative evaluation condition may be stored at a specific storage location, and the relative evaluation condition may not be carried in the evaluation request message, thereby improving the evaluation efficiency.

A method for implementing relative condition evaluation according to embodiment three of the present invention is different from embodiment two in that the evaluation request message received by the CBUS server in Step 201 does not include the evaluation objects. The method of this embodiment may be the following examples.

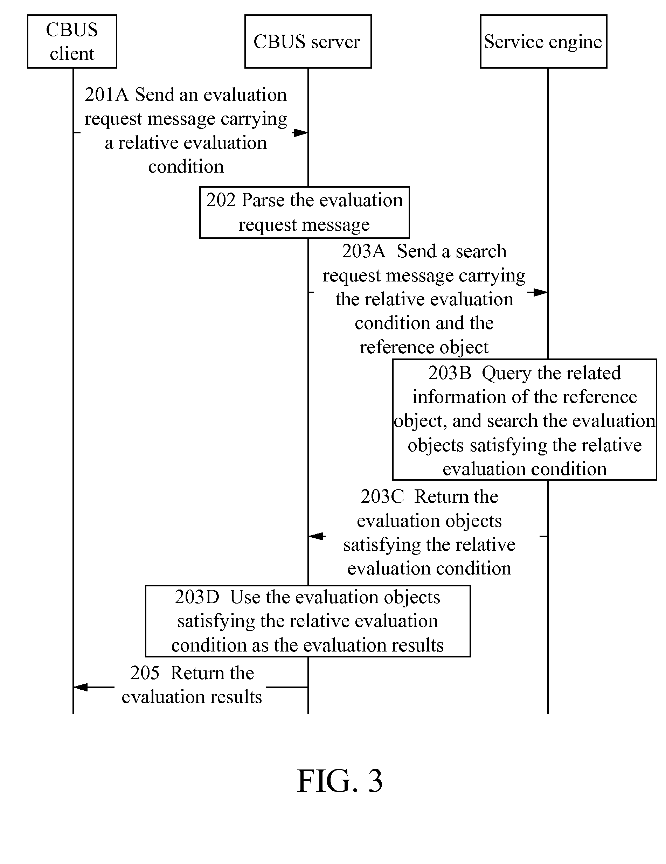

In a first example, the relative evaluation condition only includes the relative condition, and the information related to the reference object and information related to the evaluation objects to be searched (i.e. search objects) are acquired from the same information source. Specifically, FIG. 3 is a signaling flow chart of the first situation of the method for implementing relative condition evaluation according to the embodiment three of the present invention. Referring to FIG. 3, Step 201 may be replaced by Step 201A, the CBUS client sends the evaluation request message carrying the relative evaluation condition to the CBUS server, and Step 203 and Step 204 may be replaced by the following steps.

In Step 203A, the CBUS server sends a search request message carrying the relative evaluation condition and the reference object to the information source (specifically being the service engine). In Step 203B, the service engine queries the information related to the reference object, and searches for the evaluation objects satisfying the relative evaluation condition according to the information related to the reference object and the relative evaluation condition. In Step 203C, the evaluation objects satisfying the relative evaluation condition are returned to the CBUS server. In Step 203D, the CBUS server receives the returned evaluation objects satisfying the relative evaluation condition as the evaluation results.

In a second example, if the relative evaluation condition only includes the relative condition, and the information related to the reference object and the information related to the search object are acquired from different information sources, Step 203 and Step 204 may be replaced by the following steps.

The CBUS server acquires the information related to the reference object from a first information source. The CBUS server sends the search request message carrying the relative evaluation condition and the information related to the reference object to a second information source. The second information source searches for the evaluation objects satisfying the relative evaluation condition according to the relative evaluation condition and the information related to the reference object, and returns the evaluation objects to the CBUS server. The CBUS server receives the returned evaluation objects satisfying the relative evaluation condition as the evaluation results.

In a third example, if the relative evaluation condition is the combination of the relative condition (the first evaluation condition) and the condition of the evaluation object (the second evaluation condition), it is designated in the second evaluation condition that the condition of the evaluation object satisfies a fixed value, and the information related to the reference object and the information related to the search object are acquired from the same information source. In this embodiment, the evaluation objects satisfying the relative condition are searched from the service engine, and then the server further selects the evaluation result satisfying the condition of the search object. Specifically, Step 203 and Step 204 may be replaced by the following steps.

The CBUS server sends a search request message carrying the first evaluation condition and the reference object to the information source (specifically being the service engine). The service engine queries the information related to the reference object, and searches for the first evaluation object satisfying the first evaluation condition according to the information related to the reference object and the first evaluation condition. The CBUS server receives the first evaluation object satisfying the first evaluation condition returned by the service engine. The CBUS server acquires the information related to the first evaluation object, for example, the presence information, from other service engines. The CBUS server compares the information related to the first evaluation object with the fixed value designated in the second evaluation condition, and acquires the second evaluation object satisfying the second evaluation condition as the evaluation result.

Under the third example, the CBUS server may also acquire the information related to the evaluation objects from other service engines, selects the evaluation objects satisfying the conditions of the evaluation objects, and then further searches for the evaluation objects satisfying the relative condition. That is to say, under the situation that the relative evaluation condition is the combination of the relative condition and the conditions of the evaluation objects, the sequence for evaluating the two conditions is not limited in this embodiment.

In a fourth example, if the relative evaluation condition is the combination of the relative condition (the first evaluation condition) and the condition of the evaluation object (the second evaluation condition), and the information related to the reference object and the information related to the evaluation objects are acquired from different information sources, Step 203 and Step 204 may be replaced by the following steps.

The CBUS server acquires the information related to the reference object from the first information source. The CBUS server sends the search request message carrying the first evaluation condition and the information related to the reference object to the second information source. The second information source searches for the first evaluation object satisfying the first evaluation condition according to the first evaluation condition and the information related to the reference object, and returns the first evaluation object to the CBUS server. The CBUS server acquires the information related to the first evaluation object, for example, the presence information, from other service engines. The CBUS server compares the information related to the first evaluation object with the fixed value designated in the second evaluation condition, and acquires the second evaluation object satisfying the second evaluation condition as the evaluation result.

Under the fourth example, the CBUS server may firstly acquire the information related to the evaluation objects from other service engines, selects the evaluation objects satisfying the conditions of the evaluation objects, and then further searches for the evaluation objects satisfying the relative condition. That is to say, under the situation that the relative evaluation condition is the combination of the relative condition and the conditions of the evaluation objects, the sequence for evaluating the two conditions is not limited in this embodiment.

In this embodiment, the evaluation request message designates the reference object, the relative evaluation condition, and the evaluation setting. The information related to the reference object serves as the basis for evaluation, and the evaluation objects satisfying the relative evaluation condition are acquired. When the relative evaluation condition is the relative condition, the evaluation requestor does not need to designate a certain status of the evaluation object to satisfy a fixed value, such that the evaluation is performed according to a status of the reference object; and when the relative evaluation condition is a combination of the relative condition and the conditions of the evaluation objects, the evaluation objects satisfying the two conditions are selected in sequence, such that the relative condition evaluation is more flexible.

In the following, by taking a specific scenario as an example, the technical solution of the embodiment of the present invention is further described.

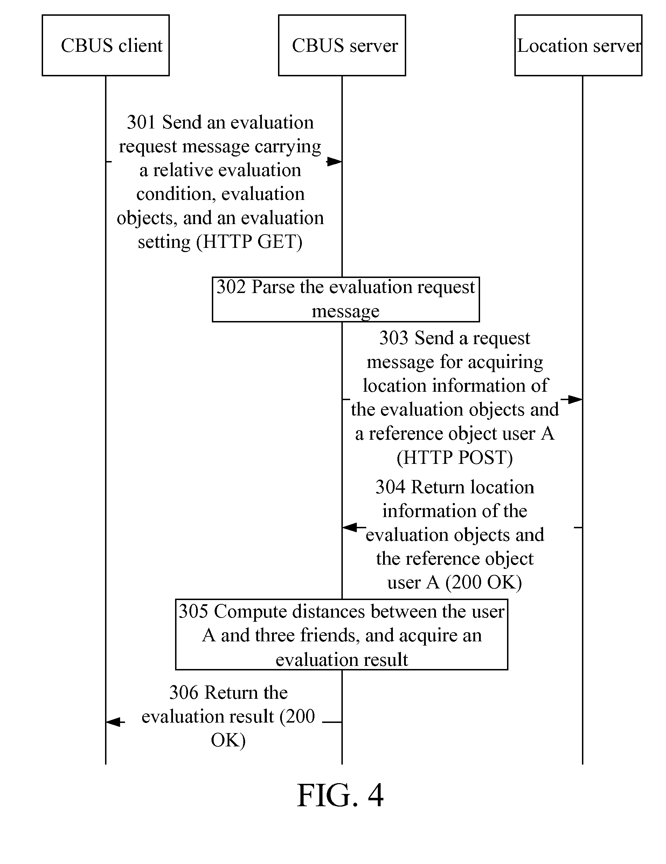

FIG. 4 is a signaling flow chart of a method for implementing relative condition evaluation according to embodiment four of the present invention. In this embodiment, a user A is a subscriber of a CBUS service. After visiting customers in another city, the user A intends to find and meet the nearest friend among some friends through the CBUS service, and it is assumed that an SIP URI of the user A is sip:a@example.com, and SIP URIs of the friends to be evaluated are respectively sip:f1@example.com, sip:f2@example.com, and sip:f3@example.com. Referring to FIG. 4, the method of this embodiment specifically includes the following steps.

In Step 301, the user A sets a relative evaluation condition, evaluation objects, and an evaluation setting through a CBUS client on the terminal, in which the relative evaluation condition is that a geography location is nearest to the user A, the evaluation objects are three friends of the user A, and the evaluation setting is once evaluation, that is, the CBUS server only needs to return the URI of one friend satisfying the condition. The CBUS client sends an evaluation request message carrying the relative evaluation condition, the evaluation setting, and the evaluation objects to the CBUS server according to the settings of the user A, in which the relative evaluation condition designates a reference object (being the user A, that is, an evaluation request initiator in this embodiment).

In this embodiment, the evaluation request message adopts an implementation manner of HTTP GET, which is as shown in the following.
GET cbusgroup@example.com HTTP/1.1
"the code of the first row is a request row, in which GET represents that the request uses a GET method in the HTTP, cbusgroup@example.com represents that the request is to evaluate an object corresponding to the identification, and the identification is a group URI in this embodiment, and HTTP/1.1 represents a protocol version"
Host: cbus.example.com "representing that the requested resource is the CBUS server"
User-Agent: CBUS-client/OMA1.0
"representing that a user agent initiating the evaluation request is the CBUS client"
Date: Thu, 10 Aug 2007 10:50:33 GMT
"representing the date and the specific time on which the request is initiated"
X-3GPP-Intended-Identity: "sip:a@example.com"
"representing an identity of the request initiator"
<?xml version="1.0"?> "xml declaration"
<policyInputData xmlns="http://www.openmobilealliance.org"
xmlns:xsi="http://www.w3.org/2001/XMLSchema-instance"
xsi:schemaLocation= "http://www.openmobilealliance.org"
otherEnablerInputTemplate.xsd">
"representing that the following is input information related to the policy"
<policyInputTemplate xsi:type="PEEMInputTemplateType"
templateID = "PEEMTemplateID_1"
template Version = "V1.0.0">
</policyInputTemplate> "representing basic input template information"
<policyInputTemplate xsi:type="OtherEnablerInputType""
templateID = "otherEnablerInputTemplateID_2"
templateVersion = "V1.0.0">
"representing self-defined input template information"
<extPolicyVAL> "external policy"
<focus>agexample.com</focus><filter>nearest</filter>
"representing that the user A serves as the reference object, and it is nearest to the user A"
</extPolicyVAL>
<eva type>once</eva_type> "represent once evaluation"
</policyInputTemplate>
</policyInputData>

In this embodiment, information interaction between the CBUS client and the CBUS server is implemented by re-using the PEM-1 interface in the PEEM, that is, by extending input and output template parameters defined in the PEM-1 interface. Specifically, the relative evaluation condition is carried by adopting an existing <extPolicyVAL> element in the definition of the interface, in which a <focus> element represents the reference object, that is, the SIP URI of the user A, and a <filter> element represents a rule, which is an enumerated type with a value being nearest or farthest, and in this embodiment, the value of the enumerated type is nearest. In addition, on the basis of a standard input template, a parameter <eva_type> being a string type is extended to represent the evaluation setting, and the element is the enumerated type with a value of once evaluation (once), realtime evaluation (realtime), or end evaluation (until_cond_matched), in which the value of the element is once in this embodiment.

In Step 302, the CBUS server receives the evaluation request message, parses the evaluation request message, acquires the evaluation objects, that is, the group members (f1, f2, and f3) represented by the SIP URI, according to the Request URI (sip:cbus-group@example.com) in the evaluation request message, and acquires that the relative evaluation condition is that the geography location is nearest to the user A, and the evaluation setting is once evaluation.

In Step 303, the CBUS server sends a request message for acquiring location information of the reference object user A and the evaluation objects sip:f1@example.com, sip:f2@example.com, and sip:f3@example.com to a location server.

In this embodiment, the request message adopts an implementation manner of HTTP POST, which is as shown in the following.

```
    POST http://location-server.example.com:9210/LocationQueryService/HTTP/1.1
    "the HTTP POST method is adopted, and the path represents that the request is
 initiated to the Location Server"
    Host: location-server.example.com[:9210]
    "representing that the requested resource is the Location server"
    User-Agent:LCS Client /OMA3.3
    "representing that a user agent initiating the evaluation request is a Location client"
    Date: Thu, 10 Aug 2007 10:50:33 GMT
    "representing the date and the specific time on which the request is initiated"
    X-3GPP-Intended-Identity: "sip:a@example.com"
    "representing the identity of the request initiator"
    Content-type: application/slir-info + xml "representing a media type of a message
 body"
    Content-Length: ... "representing a length of the message body"

    <?xml version='1.0' encoding='UTF-8'?> "xml declaration"
    <!DOCTYPE svc_init SYSTEM "MLP_SVC_INIT_330.DTD">
    "representing a reference document type definition (DTD)"
    <svc_init ver="3.3.0">
     <hdr ver='3.3.0'> "representing the header"
       <client> "representing information related to the requestor client"
        <id>testlst</id> "representing the name of the request initiator"
        <pwd>password</pwd> "representing the password"
       </client>
     </hdr>
     <slir ver='3.3.0' res_type='SYNC'> "representing the request"
       <msids> "representing the identification of the located one"
              <msid type=' SIP_URI '>a@example.com </msid>
       "identification of the user A"
        <msid type=' SIP_URI '>f1@example.com </msid> "identification of the friend
 1"
        <msid type=' SIP_URI '>f2@example.com </msid> "identification of the friend
 2"
        <msid type=' SIP_URI '>f3@example.com </msid>
        "identification of the friend 3"
       </msids>
       <loc_type type='CURRENT'/>
       "representing that the current location information of the located one is requested"
     </slir>
       </svc_init>
```

In Step 304, the location server returns the location information of the user A and the three friends to the CBUS server. The returned message is a 200 OK message corresponding to Step 303, which is as shown in the following.

```
    HTTP/1.1 200 OK "representing a request success response"
    Server: LS-serv/OMA2.0 "representing the software used by the server for
 processing the request"
    Date: Thu, 10 Aug 200710:50:39 GMT
    "representing the date and the specific time on which the request is initiated"
    Content-Type: application/slia-info+xml "representing the media type of the message
 body"
    Content-Length: ... "representing the length of the message body"

    <xml version="1.0" encoding='UTF-8'?> "xml declaration"
    <!DOCTYPE svc_result SYSTEM "MLP_SVC_RESULT_320.DTD">
    "representing the reference DTD"
         <svc_result ver="3.3.0">
        <slia ver="3.3.0"> "representing the response"
             <pos> "representing the location of the located one"
                  <msid type=" SIP_URI " enc="ASC"> a@example.com </msid>
       "representing the identification of the located one A"
                  <pd>
                  <time utc_off="+0100">20030704221700</time>
                "representing the location time"
                  <shape> "representing the shape of a location area"
                     <CircularArea> "representing the range of an ellipse"
                          <coord> "representing center coordinates of the ellipse"
                              <X>45 07 24.123N</X>
                              <Y>100 06 22.111E</Y>
                              <Z>5280</Z>
                          </coord>
                          <radius>300</radius> "representing the range"
                     </CircularArea>
                  </shape>
                  <alt>5280.0</alt> "representing a height"
                  <alt_acc>300</alt_acc> "representing the accuracy of the height"
                  <speed>42.42640687119285</speed> "representing a speed of the
             located one"
                  <direction>45.0</direction> "representing a moving direction of the
             located one"
                  <lev_conf>0.90</lev_conf>
                  "representing a possibility percentage of the located one within the
             range"
                  </pd>
             </pos>
             <pos>
                  <msid type=" SIP_URI " enc="ASC"> f1@example.com </msid>
             "representing the identification of the located one f1"
                  <pd>
                  <time utc_off="+0100">20030704221700</time>
                  "representing a location time"
                  <shape> "representing the shape of the location area"
                     <CircularArea> "representing the range of the ellipse"
                          <coord> "representing the center coordinates of the ellipse"
                              <X>56 09 58.183N</X> "representing the range"
                              <Y>107 09 52.532E</Y>
                              <Z>3361</Z>
                          </coord>
                          <radius>300</radius> "representing the range"
                     </CircularArea>
                  </shape>
                  <alt>5280.0</alt> "representing the height"
                  <alt_acc>300</alt_acc> "representing the accuracy of the height"
                  <speed>42.42640687119285</speed> "representing the speed of the
             located one"
                  <direction>45.0</direction> "representing the moving direction of the
             located one"
                  <lev_conf>0.90</lev_conf>
                  "representing the possibility percentage of the located one within the
             range"
                  </pd>
             </pos>
         </slia>
            </svc_result>
```

In Step 305, the CBUS server computes distances between the user A and the three friends according to the received location information, and acquires that the friend currently being nearest to the user A is sip:f2@example.com through comparison.

In Step 306, the CBUS server returns an evaluation result (that is, the SIP URIaip:f2@example.com of the friend currently being nearest to the user A) to the CBUS client. The returned message is a 200 OK message corresponding to Step 301, which is as shown in the following.

```
    HTTP/1.1 200 OK "representing a request success response"
    Etag: "et53" "representing a current value of an entity tag"
    ...

    <?xml version="1.0"?> "xml declaration"
    <policyOutputData xmlns="http://www.openmobilealliance.org"
    xmlns:xsi="http://www.w3.org/2001/XMLSchema-instance"
          xsi:schemaLocation= "http://www.openmobilealliance.org"
          otherEnablerOutputTemplate.xsd">
            "representing the following is output information related to the policy"

    <policyOutputTemplate xsi:type="PEEMOutputTemplateType"
                      templateID = "PEEMTemplateID_1"
                      templateVersion = "V1.0.0">
                          "representing basic output template information"
                  <StatusCode>2101</StatusCode >
                      "representing that a result status of policy processing is that the
                 server may handle the process"
                  <StatusText>ALLOW</StatusText >
                     "representing attached information of StatusCode"
          </policyOutputTemplate>

    <policyOutputTemplate xsi:type="OtherEnablerOutputType""
                        templateID = "otherEnablerOutputTemplateID_2"
    template Version = "V1.0.0"> "representing self-defined output template
 information"
                  <StatusCode>2101</StatusCode >
                    "representing that the result status of policy processing is that the
               server may handle the process"
                  <StatusText>ALLOW</StatusText >
                    "representing the attached information of the StatusCode"
                  <urilist>f2@example.com</urilist>
                    "representing that the evaluation result is the friend 2"
    </policyOutputTemplate>
       </ policyOutputData >
```

Corresponding to Step 301, the step is implemented by extending the standard output template parameter defined by the PEM-1 interface, that is, a new parameter <urilist> of an array type, representing the evaluation result (URI list) returned by the CBUS server, is defined.

In this embodiment, the evaluation request message designates the reference object, the relative evaluation condition, the evaluation setting, and the evaluation objects, the location information of the reference object is acquired from the corresponding service engine, that is, the location server of this embodiment, according to the relative evaluation condition, and is used as a basis for evaluation, the relative evaluation condition is the relative condition, and the relative condition is evaluated according to the evaluation objects designated by the evaluation requestor, such that the evaluation is performed according to the status of the reference object, and the relative condition evaluation is more flexible.

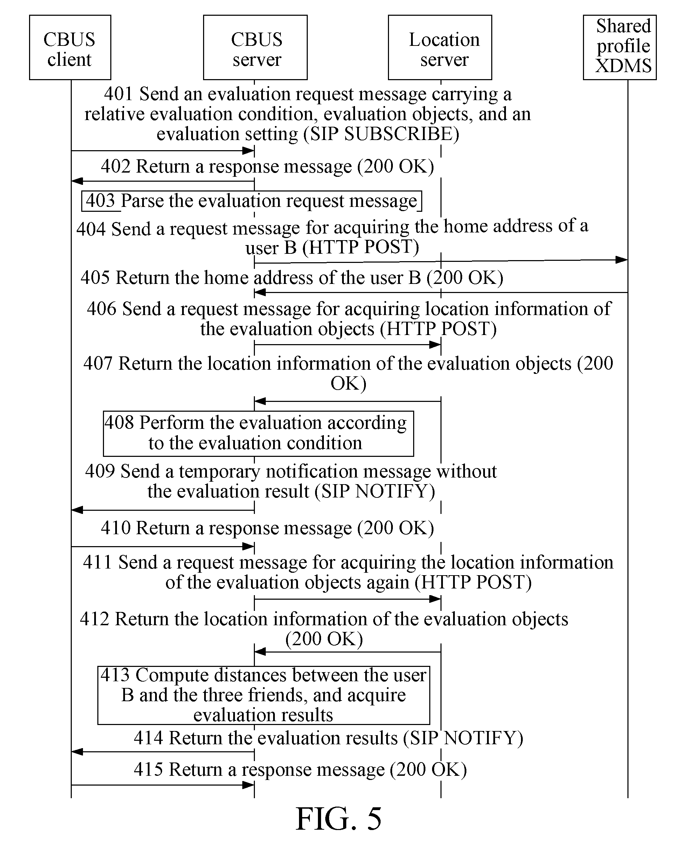

FIG. 5 is a signaling flow chart of a method for implementing relative condition evaluation according to embodiment five of the present invention. In this embodiment, the user A intends to determine whether the friends f1, f2, and f3 are near the home address of a friend B through the CBUS service. This embodiment is different from embodiment four in that the reference object is others designated by the evaluation request initiator, and the information related to the reference object and the information related to the evaluation objects are from different information sources. It is assumed that the SIP URI of the user A is sip:a@example.com, and the SIP URI of the friend B is sip:b@example.com. Referring to FIG. 5, the method of this embodiment specifically includes the following steps.

In Step 401, the user A sets the relative evaluation condition, the evaluation objects, and the evaluation setting through the CBUS client on the terminal, in which the relative evaluation condition is that the geography location is in a range of 500 m away from the friend B, the evaluation objects are three friends of the user A, and the evaluation setting is end evaluation. The CBUS client sends the evaluation request message carrying the relative evaluation condition, the evaluation setting, and the evaluation objects to the CBUS server according to the settings of the user A, in which the relative evaluation condition designates the reference object (being the friend B in this embodiment).

In this embodiment, the evaluation request message adopts an implementation manner of SIP SUBSCRIBE, which is as shown in the following.

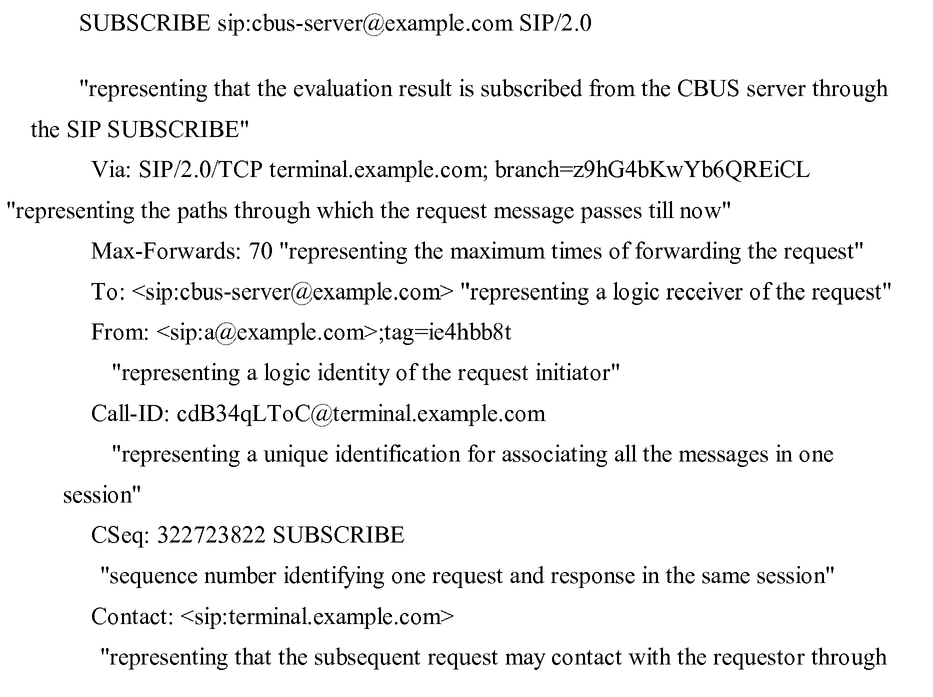

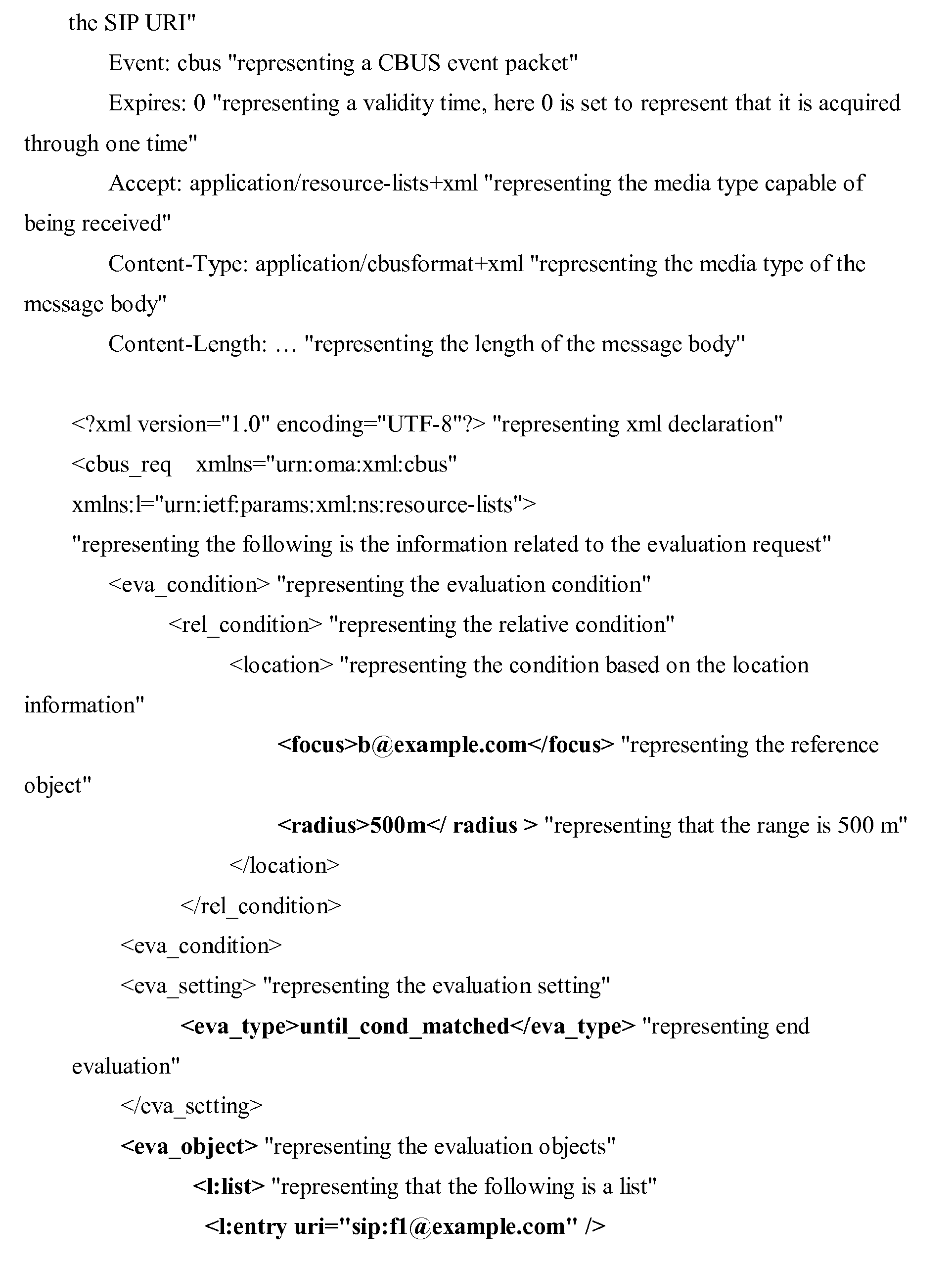

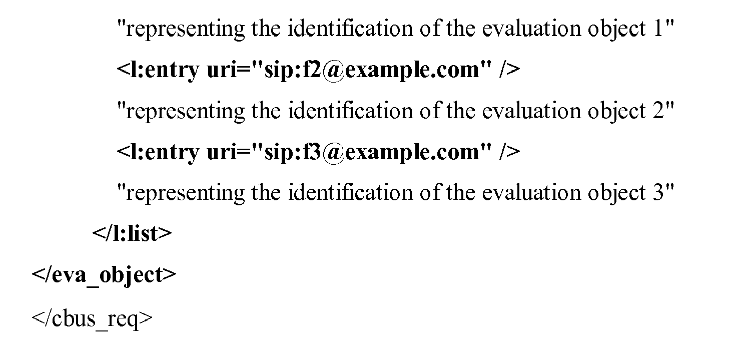

The <cbus_req> element in the message body is adapted to represent the information in the evaluation request message, and the <cbus_req> element includes two sub-elements being <eva_condition> and <eva_setting>, respectively adapted to represent the relative evaluation condition and the evaluation setting. The <eva_condition> further includes a sub-element <rel_condition>, adapted to represent the relative condition, the <rel_condition> includes a sub-element <location>, adapted to represent the relative evaluation condition based on the location information, and the CBUS server acquires the related information from the location server. The <focus> element is adapted to represent the reference object (friend B) of the relative condition, and a value thereof is the SIP URI of the friend B. The <radius> element is adapted to represent the range, that is, represents that within a range of 500 m, the values of the two elements may be randomly designated by the user. In this embodiment, a sub-element <eva_type>, adapted to represent the evaluation manner, is further defined, and the element is an enumerated type with a value being once, realtime, or until_cond_matched, respectively adapted to represent once evaluation, realtime evaluation, and end evaluation, in which the value of the <eva_type> is until_cond_matched in this embodiment. In this embodiment, a specific evaluation object list is carried through the evaluation request message, such that the extending element <eva_object> in the message body is adapted to represent the evaluation objects, and includes a sub-element <list> representing the evaluation object list, in which each evaluation object in the list is represented by the sub-element <entry>.

In Step 402, the CBUS server receives the evaluation request message, and returns a 200 OK response message to the CBUS client.

In Step 403, the CBUS server parses the evaluation request message, acquires that the evaluation objects are f1@example.com, sip:f2@example.com, and sip:f3@example.com, the relative evaluation condition is being within the range of 500 m away from the friend B, and the evaluation setting is end evaluation.

In Step 404, the CBUS server sends a request message for acquiring the home address of the user B to a shared profile XDMS, in which the message may adopt the implementation manner of HTTP POST.

In Step 405, the shared profile XDMS returns the home address of the user B to the CBUS server, in which the message may be a 200 OK response message.

In Step 406, the CBUS server sends a request message for acquiring location information of the evaluation objects sip:f1@example.com, sip:f2@example.com, and sip:f3@example.com to the location server, in which the request message in the step may adopt the implementation manner of HTTP POST.

In Step 407, the location server returns the location information of f1, f2, and f3 to the CBUS server. The returned message is a 200 OK message corresponding to Step 406, and the implementation manner of the message is the same as the returned message in Step 304 in embodiment three.

This embodiment is not limited to the execution sequence of Step 404 to Step 407, and the technical solutions in which Step 405 is performed after Step 404 and Step 407 is performed after Step 406 also fall within the protection scope of this embodiment of the present invention.

In Step 408, the CBUS server computes the distance between each evaluation object and the home address of the user B according to the received home address of the user B and the location information of f1, f2, and f3, and acquires the evaluation object satisfying the relative evaluation condition through comparison. If currently the evaluation object satisfying the relative evaluation condition does not exist, Step 409 is performed; otherwise, Step 412 is performed.

In Step 409, the CBUS server sends a temporary notification message without the evaluation result to the CBUS client. The temporary notification message may adopt an implementation manner of SIP NOTIFY, which is as shown in the following.

```
   NOTIFY sip:a@example.com SIP/2.0
   "representing that the evaluation results are returned to the user A in the SIP NOTIFY
 manner"
    Via: SIP/2.0/TCP cbus-server.example.com;branch=z9hG4bK4EPIfSFQK1
 "representing the paths through which the request message passes until now"
    Max-Forwards: 70 "representing the maximum times of forwarding the request"
    From: <sip:cbus-server.example.com>;tag=zpNctbZq
    "representing the logic identity of the request initiator"
    To: <sip:a@example.com>;tag=ie4hbb8t "representing the logic receiver of the
 request"
    Call-ID: cdB34qLToC@terminal.example.com
    "representing a unique identification for associating all the messages in one session"
    CSeq: 997935769 NOTIFY "sequence number identifying one request and response
 in the same session"
    Contact: <sip:cbus-server.example.com>
    "representing that the subsequent request may contact with the requestor through the
 SIP URI"
    Event: cbus "representing the CBUS event packet"
    Subscription-State: active;expires=0
    "representing a validity time, here 0 is set to represent that it is acquired through one
 time"
    Content-Type: text/plain "representing the media type of the message body"
    Content-Length: ... "representing the length of the message body"
```

There is no rule matcher at this moment, please wait for a moment, once someone matches the condition, you will be notified!

In Step 410, the CBUS client returns a 200 OK response message corresponding to Step 409 to the CBUS server.

In Step 411, under triggering of a certain condition (for example, a timing device), the CBUS server requests to acquire the location information of the evaluation objects and the user B again from the location server.

A time interval of periodically acquiring the location information by the CBUS may be set by the user A or by the CBUS server.

In Step 412, the location server returns the location information of the evaluation objects and the user B to the CBUS server, and further, the CBUS server tracks the location information of the evaluation object in a subscription notification manner.

In Step 413, the CBUS server computes the distances between the user B and the three friends according to the received location information, and acquires the evaluation objects satisfying the relative evaluation condition being f1@example.com and f2@example.com through comparison.

In Step 414, the CBUS server returns the evaluation results (that is, the evaluation objects satisfying the relative evaluation condition being f1@example.com and f2@example.com) to the CBUS client. The returned message may adopt the implementation manner of SIP NOTIFY, which is as shown in the following.

```
    NOTIFY sip:a@example.com SIP/2.0
    "representing that the evaluation results are returned to the user A in the SIP
 NOTIFY manner"
    Via: SIP/2.0/TCP cbus-server.example.com;branch=z9hG4bK4EPIfSFQK1
 "representing the paths through which the request message passes until now"
    Max-Forwards: 70 "representing the maximum times of forwarding the request"
    From: <sip:cbus-server@example.com>;tag=zpNctbZq
    "representing the logic identity of the request initiator"
    To: <sip:a@example.com>;tag=ie4hbb8t "representing the logic receiver of the
 request"
    Call-ID: cdB34qLToC@terminal.example.com
    "representing a unique identification for associating all the messages in one session"
    CSeq: 997935769 NOTIFY "sequence number identifying one request and response
 in the same session"
    Contact: <sip:cbus-server.example.com>
    "representing that the subsequent request may contact with the requestor through the
 SIP URI"
    Event: cbus "representing the CBUS event packet"
    Subscription-State: active;expires=0
    "representing a validity time, here 0 is set to represent that it is acquired through one
 time"
    Content-Type: application/resource-lists+xm1 "representing the media type of the
 message body"
    Content-Length: ... "representing the length of the message body"
   <?xml version="1.0" encoding="UTF-8"?> "representing xml declaration"
     <resource-lists xmlns="urn:ietf:params:xml:ns:resource-lists"
              xmlns:xsi="http://www.w3.org/2001/XMLSchema-instance">
             "representing that the following resource list is the evaluation results"
        <list>
          <entry uri="sip:bill@example.com"/> "evaluation result 1"
          <entry uri="sip:joe@example.com"/> "evaluation result 2"
        </list>
     </resource-lists>
```

In Step 415, the CBUS client returns a 200 OK response message corresponding to Step 414 to the CBUS server.

In this embodiment, the evaluation request message designates the reference object, the relative evaluation condition, the evaluation setting, and the evaluation objects, the location information of the reference object and the location information of the evaluation objects are respectively acquired from the shared profile XDMS and the location server according to the relative evaluation condition, and are used as a basis for evaluation, the relative evaluation condition is the relative condition, and the evaluation requestor does not need to designate a certain status of the evaluation object to satisfy a fixed value, such that the evaluation is performed according to a status of the reference object, and the relative condition evaluation is more flexible.

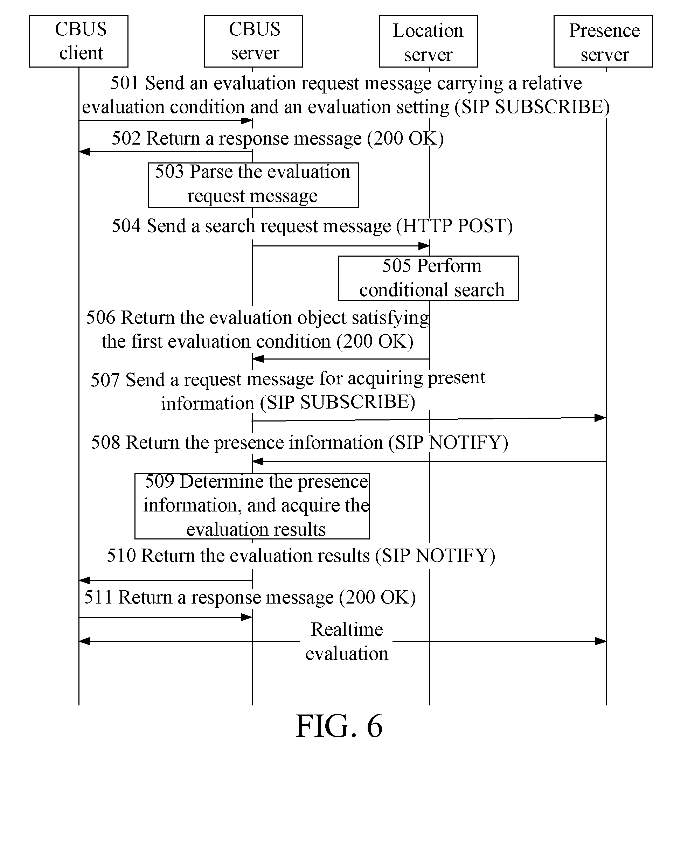

FIG. 6 is a signaling flow chart of a method for implementing relative condition evaluation according to embodiment six of the present invention. In this embodiment, a location of an advertisement mobile station is dynamically changed, and it intends to search for IM on-line music lovers having a current geography location within a range of 1000 m away from the advertisement mobile station through a CBUS service in a realtime evaluation manner. Referring to FIG. 6, the method of this embodiment specifically includes the following steps.

In Step 501, the advertisement mobile station sends an evaluation request message to a CBUS server through a CBUS client located therein, the evaluation request message includes a relative evaluation condition and an evaluation setting, in which the relative evaluation condition is the IM on-line music lovers having the current geography location within a range of 1000 m away from the advertisement mobile station, and the relative evaluation condition designates that a reference object is the advertisement mobile station; and the evaluation setting is realtime evaluation.

In this embodiment, the evaluation request message adopts the implementation manner of SIP SUBSCRIBE, which is as shown in the following.

```
    SUBSCRIBE sip:cbus-server@example.com SIP/2.0
    "representing that the evaluation results are subscribed from the CBUS server
 through the SIP SUBSCRIBE"
         Via: SIP/2.0/TCP terminal.example.com;
            branch=z9hG4bKwYb6QREiCL
          "representing the paths through which the request message passes until now"
         Max-Forwards: 70 "representing the maximum times of forwarding the
 request"
         To: <sip:cbus-server@example.com> "representing a logic receiver of the
    request"
         From: <sip:advertiser@example.com>;tag=ie4hbb8t
         "representing a logic identity of the request initiator"
         Call-ID: cdB34qLToC@terminal.example.com
       "representing a unique identification for associating all the messages in one
   session"
         CSeq: 322723822 SUBSCRIBE
       "sequence number identifying one request and response in the same session"
         Contact: <sip:terminal.example.com>
       "representing that the subsequent request may contact with the requestor through
  the SIP URI"
         Event: cbus "representing a CBUS event packet"
         Expires: 0 "representing a validity time, here 0 is set to represent that it is
 acquired through one time"
        Accept: application/resource-lists+xml "representing the media type capable of
    being received"
         Content-Type: application/cbusformat+xml "representing the media type of the
 message body"
         Content-Length: ... "representing the length of the message body"
      <?xml version="1.0" encoding="UTF-8"?> "representing xml declaration"
      <cbus_req xmlns="urn:oma:xml:cbus"
      xmlns :pdm="um:ietf:params:xml:ns:pidf:data-model"
      xmlns :1= "urn :oma :xml :loc:user "> "representing the following is the information
 related to the evaluation request"
         <eva_condition> "representing the evaluation condition"
               <rel_condition> "representing the relative condition"
                 <location> "representing the condition based on location information"
                          <focus>advertiser@example.com</focus>
                           "representing the reference object"
                          <radius>1000m</ radius > "representing that the range is 500
 m"
      </location>
                 </rel_condition>
                 <fix_condition> "representing the condition of the search object"
                       <presence> "representing the condition based on the presence
 information"
                         <rule>//pdmauple[*/opaervice-id=
 "org.openmobilealliance:IM-pager-mode" /pdmatatus[basic="open"]</rule>
 "representing IM on-line"
                       </presence>
                       <shared_xdms>
                     "representing the condition based on the information stored in the
                XDMS by the search object individually"
                       <rule>//l:hobbies/l:hobby/l:music]</rule>
                      "representing that the hobby includes music"
                       </shared_xdms>
                 </fix_condition>
       <eva_condition>
       <eva_setting> "representing the evaluation setting"
             <eva_type>realtime</eva_type> "representing realtime evaluation"
             <eva_duration>12h</eva_duration>
             "representing that an evaluation duration is 12 hours"
             <eva_interval>5min</eva_interval> "representing that an evaluation interval
  is 5 minutes"
             <result_min>50</result_min> "representing a lower limit of the number of
  returned evaluation results"
             <result_max>200</result_max> "representing an upper limit of the number
  of returned evaluation results"
       </eva_setting>
       </cbus_req>
```

The definitions of the <rel_condition> element and the sub-element are the same as those of embodiment four. The relative evaluation condition in this embodiment is a combination of a relative condition and a condition of evaluation objects, such that a new element <fix_condition>, adapted to represent the condition of the evaluation objects, is defined, and sub-elements <presence> and <shared_xdms> thereof are respectively adapted to represent that the condition is based on the presence information and information in the shared XDMS, in which <rule> elements in the two sub-elements are both adapted to represent specific rule content. Since this embodiment adopts the realtime evaluation manner, new sub-elements <eva_duration> adapted to represent the evaluation duration, <eva_interval> adapted to represent the time interval of the realtime evaluation, and <result_min> and <result_max> adapted to represent the lower limit and the upper limit of the number of the evaluation results returned by the CBUS server required by the evaluation request initiator, are defined.

In Step 502, the CBUS server receives the evaluation request message, and returns a 200 OK response message to the CBUS client.

In Step 503, the CBUS server parses the evaluation request message, and acquires the relative evaluation condition, the evaluation setting, and the reference object.

In Step 504, the relative evaluation condition of this embodiment includes a first evaluation condition (the relative condition) and a second evaluation condition (the condition of the evaluation objects), in which the first evaluation condition is the music lovers having the current geography location within the range of 1000 m away from the advertisement mobile station, the second evaluation condition is IM on-line, and the CBUS server sends a search request message carrying the first evaluation condition and the reference object to an information source (specifically being a location server in this embodiment), so as to request to search for the music lovers having the current geography location within the range of 1000 m away from the advertisement mobile station.

The search request message in this embodiment may adopt an implementation manner of HTTP POST, which is as shown in the following.

```
     POST http://location-server.example.com:9210/LocationQueryService/HTTP/1.1
      "the HTTP POST method is adopted, and the path represents that the request is
 initiated to the Location Server"
    Host: location-server.example.com[:9210]
    "representing that the requested resource is the Location server"
    User-Agent:LCS Client /OMA3.3
    "representing that a user agent initiating the evaluation request is a Location client"
    Date: Thu, 10 Aug 2007 10:50:33 GMT "representing the date and the specific time
 on which the request is initiated"
    X-3GPP-Intended-Identity: "sip:advertiser@example.com"
    "representing the identity of the request initiator"
    Content-type: application/slir-info + xml "representing a media type of a message
 body"
    Content-Length: ... "representing a length of the message body"
    <?xml version='1.0' encoding='UTF-8'?>
    <!DOCTYPE svc_init SYSTEM "MLP_SVC_INIT_330.DTD">
    <svc_init ver="3.3.0" search="TRUE">
       <hdr ver='3.3.0'> "representing the header"
         <client> "representing information related to the requestor client"
          <id>testlst</id> "representing the name of the request initiator"
          <pwd>password</pwd> "representing the password"
         </client>
       </hdr>
       <slir ver='3.3.0' res_type='SYNC'> "representing the request part"
         <change_area type=" MS_MITHIN_AREA">
         "representing that the time of triggering the location is when the search object
    enters the area"
                     <target_area> "representing a target area"
                        <focus>advertiser@example.com</focus>
                        "representing the reference object is the mobile advertisement
                   station"
                            <radius>1000m</radius> "representing that the range is
    1000 m"
                     </target_area>
         </change_area>
         <userinfo>
                 <hobby>music</hobby> "representing that the hobby includes music"
         </userinfo>
         <loc_type type='CURRENT_OR_AST'/>
         "representing that the current or previous location information of the located
    one is requested"
       </slir>
          </svc_init>
```

In order to satisfy the searching function, in this embodiment, a Mobile Location Protocol (MLP) is extended. Specifically, a new attribute-search is defined for the svc_init element, and is adapted to represent whether the request message sent to the location server is the search request message. If the value of the attribute is true, it indicates that the request message is the search request message, and if the value of the attribute is false, it indicates that the request message is the request message for location information.

In Step 505, the location server performs conditional search, queries information related to the reference object, and searches for the evaluation object satisfying the first evaluation condition according to the information related to the reference object and the first evaluation condition.

Specifically, the location of the advertisement mobile station is firstly determined, persons within the range of 1000 m away from the advertisement mobile station are determined according to the location of the advertisement mobile station, the persons within the range of 1000 m away from the advertisement mobile station are further selected according to information in a user information database in the location server, and the persons having the hobby including music are selected.

Further, the location server also provides a function in which the user may select whether to open the location information. If the user selects to open the location information, the objective of opening the location information may be further designated, for example, to receive the evaluation, and receive the advertisement, and only when the user selects to open the location information, the location server can list the user into search objects of the search request message. In order to reduce the time of processing the search request message by the location server, for the users willing to open the location information, the location server may map the location information of the users to specific map areas, and thus, after receiving the search request message, the location server may quickly determine which persons exist in a certain area range. In addition, the location server provides a user information storage database, adapted to store the basic information in common use of the user, such that the persons satisfying the location relative evaluation condition are further selected, so as to avoid the CBUS server from acquiring the related information from other databases (for example, a shared profile XDMS) for storing the user information, thereby avoiding excessive traffic interaction between the CBUS server and the service engine, but the user information is only used in the location server, and is private information. If the database for storing the user information is implemented by the XDMS, the basic information in common use of each user may be represented by one xml document, which is as shown in the following.

```
<?xml version="1.0" encoding="UTF-8"?> "representing xml declaration"
        <loc-userinfo xmlns = "urn :oma :xml :loc:user"> "representing that the
 following is the basic information of the Location service user"
              <uri>user1@example.com</uri> "representing the URI of the user"
              <gender>female</gender> "representing the gender"
              <age>25</age > "representing the age"
              <job>engineer</job> "representing the job"
              <company>Huawei Technology</company> "representing the company"
              <hobbies> "representing the hobby"
                <hobby>music</hobby> "representing that the hobby includes music"
                <hobby>game</hobby> "representing that the hobby includes game"
              </hobbies>
              <open-willingness> "representing that the location information setting is
 opened"
                  <basic>open</basic> "representing the open willingness"
                  <purpose>evaluation</purpose>
                "represent that the location information is opened for the evaluation
           service"
                  <purpose>advertisement</purpose>
                "representing that the location information is opened for the
           advertisement service"
              </open-willingness>
             </loc-userinfo>
```

In Step 506, the CBUS server receives the evaluation object satisfying the first evaluation condition returned by the location server, the returned message in the step may be a 200 OK response message corresponding to Step 504, which is as shown in the following.

```
    HTTP/1.1 200 OK "representing a request success response"
      Server: LS-serv/OMA2.0 "representing the software used by the server for
 processing the request"
    Date: Thu, 10 Aug 200710:50:39 GMT "representing the date and the specific time
 on which the request is initiated"
    Content-Type: application/slia-info+xml "representing the media type of the message
 body"
    Content-Length: ... "representing the length of the message body"

    <xml version="1.0" encoding='UTF-8'?> "xml declaration"
    <!DOCTYPE svc_result SYSTEM "MLP_SVC_RESULT_320.DTD">
    "representing the reference DTD"
        <svc_result ver="3.3.0">
       <slia ver="3.3.0"> "representing the response"
           <msids> "representing the identification of the search object satisfying the
       condition"
                <msid type=' SIP_URI '>user1@example.com </msid>
                "user 1 satisfying the condition"
                <msid type=' SIP_URI '>user2@example.com</msid>
                "user 2 satisfying the condition"
                <msid type=' SIP_URI '>user3@example.com </msid>
                "user 3 satisfying the condition"
                <msid type=' SIP_URI '>user278@example.com </msid>
                "user 278 satisfying the condition"
           </msids>
       </slia>
     </svc_result>
```

After Step 506 is performed, the CBUS server acquires the information related to the evaluation objects satisfying the first evaluation condition from the related service engine according to the second evaluation condition and the evaluation setting, so as to acquire the evaluation results. In this embodiment, the second evaluation condition is IM service on-line, and the evaluation results are acquired through the following steps.

In Step 507, the CBUS server sends a request message for acquiring the present information to a presence server, and specifically, for acquiring the presence information showing whether the persons selected in Step 505 are IM service on-line; and the request message may adopt the implementation manner of SIP SUBSCRIBE.

In Step 508, the presence server returns the presence information to the CBUS server, and the returned message may adopt an implementation manner of SIP NOTIFY.

In Step 509, the CBUS server determines the received presence information, and selects the persons who are IM on-line, that is, the evaluation objects satisfying the second evaluation condition, so as to acquire the evaluation results.

In Step 510, the CBUS server sends the evaluation results to the advertisement mobile station. The sent message may adopt the implementation manner of SIP NOTIFY, which is as shown in the following.

```
    NOTIFY sip:advertiser@example.com SIP/2.0
    "representing that the evaluation results are returned to the user A in the SIP
 NOTIFY manner"
      Via: SIP/2.0/TCP cbus-server.example.com;branch=z9hG4bK4EP1fSFQK1
 "representing the paths through which the request message passes until now"
      Max-Forwards: 70 "representing the maximum times of forwarding the request"
      From: <sip:cbus-server@example.com>;tag=zpNctbZq
      "representing the logic identity of the request initiator"
      To: <sip:advertiser@example.com>;tag=ie4hbb8t
      "representing the logic receiver of the request"
      Call-ID: cdB34qLToC@terminal.example.com
      "representing a unique identification for associating all the messages in one session"
      CSeq: 997935769 NOTIFY "sequence number identifying one request and
 response in the same session"
      Contact: <sip:cbus-server.example.com>
      "representing that the subsequent request may contact with the requestor through
 the SIP URI"
      Event: cbus "representing the CBUS event packet"
      Subscription-State: active;expires=0
      "representing a validity time, here 0 is set to represent that it is acquired through
 one time"
      Content-Type: application/resource-lists+xml "representing the media type of the
 message body"
      Content-Length: ... "representing the length of the message body"
   <?xml version="1.0" encoding="UTF-8"?> "representing xml declaration"
     <resource-lists xmlns="urn:ietf:params:xml:ns:resource-lists"
          xmlns:xsi="http://www.w3.org/2001/XMLSchema-instance">
         "representing the following resource list is the evaluation results"
        <list>
          <entry uri="sip:user1@example.com" /> "evaluation result 1"
          <entry uri="sip:user5@example.com" /> "evaluation result 2"
          <entry uri="sip:user11@example.com" /> "evaluation result 3"
          <entry uri="sip:user128@example.com" />"evaluation result 45"
        </list>
           </resource-lists>
```

Further, the evaluation request message in Step 501 includes a <result_min> element and a <result_max> element, that is, the upper limit (200) and the lower limit (50) of the number of the evaluation results set in the relative evaluation condition, and before returning the evaluation results, the CBUS server counts the evaluation results. If the number of the evaluation results is smaller than 50, the CBUS server performs realtime evaluation according to the evaluation interval (<eva_internal> element) set by the advertisement mobile station, until the number of the evaluation results reaches 50, and then notifies the advertisement mobile station of the evaluation results; while if the number of the evaluation results of this time is greater than 200, the CBUS server notifies the advertisement mobile station of the evaluation results in multiple times, and the number of the evaluation results returned each time is 200 at most.

In Step 511, the advertisement mobile station returns a 200 OK response message corresponding to Step 510 to the CBUS server.

This embodiment adopts the realtime evaluation manner, such that the CBUS server performs periodic evaluation according to the evaluation interval (<eva_interval>), until the evaluation duration (<eva_duration>) is reached.

In addition, this embodiment is not limited to the execution sequence of Step 504 to Step 509, the presence information of the evaluation objects may be firstly acquired, the persons being IM on-line are selected, and then the evaluation objects satisfying the relative evaluation condition are further searched.

In this embodiment, the evaluation request message designates the reference object, the relative evaluation condition, and the evaluation setting, the location information of the advertisement mobile station is acquired from the location server, the evaluation objects partially satisfying the relative evaluation condition are searched, and the evaluation objects completely satisfying the relative evaluation condition are further selected according to the presence information acquired from the presence server, so as to obtain the evaluation results. In this embodiment, the evaluation is performed according to a status of the reference object, and the evaluation is more flexible. Further, the location of the advertisement mobile station is dynamically changed, and the CBUS server automatically acquires the changed location information of the advertisement mobile station, thereby avoiding inconveniences resulted after the relative evaluation condition is manually changed.

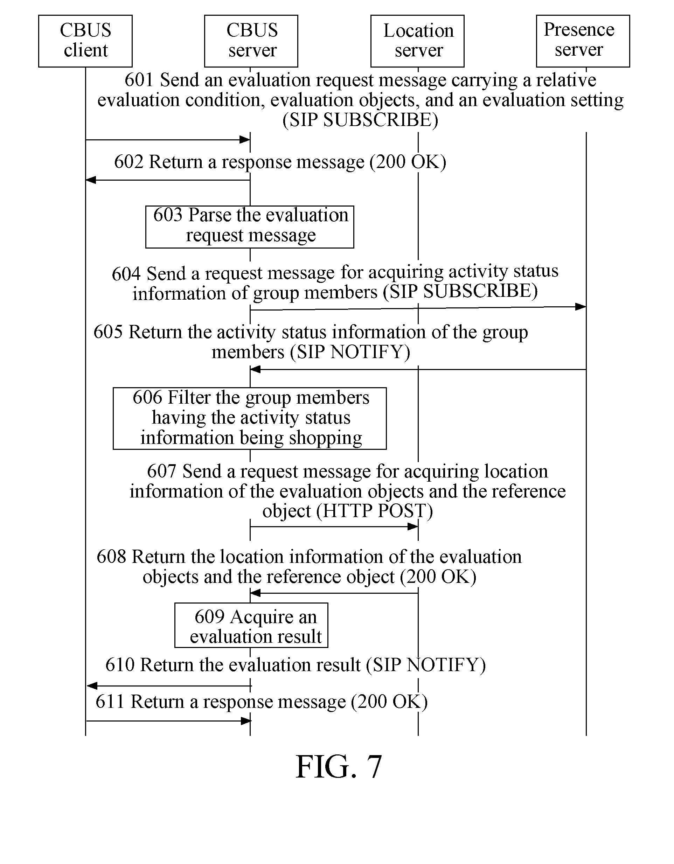

FIG. 7 is a signaling flow chart of a method for implementing relative condition evaluation according to embodiment seven of the present invention. In this embodiment, a CBUS service supports an evaluation function using a group as a unit. A user A intends to evaluate three created groups through the CBUS service, so as to search the three groups for the group having the largest number of persons satisfying a relative evaluation condition. SIP URIs of the three groups are respectively sip:group1@example.com, sip:group2@example.com, and sip:group2@example.com, the relative evaluation condition is that the geography location is within a range of 500 m away from the user A, and an activity status is shopping. Referring to FIG. 7, the method of this embodiment specifically includes the following steps.

In Step 601, the user A sends an evaluation request message to a CBUS server through a CBUS client on a terminal. The evaluation request message includes a relative evaluation condition, an evaluation setting, and evaluation objects. The relative evaluation condition is that the geography location is within the range of 500 m away from the user A, the activity status is shopping, the evaluation objects are three groups, and the evaluation setting is once evaluation, in which the relative evaluation condition designates that the reference object is the user A.

A message body of the evaluation request message is as shown in the following.

```
    <?xml version="1.0" encoding="UTF-8"?> "representing xml declaration"
    <cbusreq xmlns=" xmlns="urn:oma:xml:cbus"
    xmlns:ls="urn:oma:xml:poc:list-service"
    xmlns:rl="urn:ietf:params:xml:ns:resource-lists"
    xmlns:cr="urn:ietf:params:xml:ns:common-policy"
    xmlns:pdm="urn:ietf:params:xml:ns:pidf:data-model"
    xmlns:rpid="urn:ietfparams:xml:ns:pidf:rpid">
    "representing that the following is the information related to the evaluation request"

       <ls:list-service>
         <rl:list> "representing the evaluation objects"
           <rl:entry uri="sip:group1@example.com"/> "evaluation object 1"
           <rl:entry uri="sip:group2@example.com"/> "evaluation object 2"
           <rl:entry uri="sip:group3@example.com"/> "evaluation object 3"
         </rl:list>

    <cr:ruleset> "representing the evaluation condition and the evaluation setting"
           <cr:rule>
              <cr:conditions> "representing the evaluation condition"
                <is-list-member/> "representing that it shall be the member in the
 evaluation objects"
                <location> "representing the condition based on the location
 information"
                    <focus>a@example.com</focus> "representing the reference
 object"
                    <radius>500m</radius> "representing the range"
                </location>
                <presence>"representing the condition based on the presence
 information"
                  <filter>//pdm:person/rpid:activities/rpid:shopping</filter>
                  "representing that the activity status is shopping"
                </presence>
              </cr: conditions>
              <cr:actions> "representing the evaluation setting"
                <result_urilist>most</result_urilist>
                "representing that the URI of the group having the largest number of
           persons satisfying the evaluation condition is returned"
                <eva_type>once</eva_type> "representing once evaluation"
              </cr:actions>
           </cr:rule>
         </cr:ruleset>
    </ls:list-service>
    </cbusreq>
```

A <location> element and a <presence> element in the message body are respectively adapted to represent the relative evaluation condition based on the location information and the relative evaluation condition based on the presence information. The value of <result_urilist> may be most, adapted to represent that the server is required to return the URI of the group having the largest number of persons satisfying the relative evaluation condition, and the value of the element may also be least, adapted to represent that the server is required to return the URI of the group having the fewest number of persons satisfying the relative evaluation condition.

In Step 602, the CBUS server receives the evaluation request message, and returns a 200 OK response message to the CBUS client.

In Step 603, the CBUS server parses the evaluation request message, and acquires the relative evaluation condition, the evaluation setting, the evaluation objects, and the reference object.

In the step, the CBUS server acquires list information of group members from a related information source (for example, a shared group XDMS) according to group identifications of the three groups.

In Step 604, the CBUS server sends a request message for acquiring activity status information of the group members to a presence server, so as to request to acquire the activity status information of all the members in the three groups. The request message may adopt an implementation manner of SIP SUBSCRIBE.

In Step 605, the presence server returns the activity status information of the group members to the CBUS server. The returned message may adopt an implementation manner of SIP NOTIFY.

In Step 606, the CBUS server selects the group members having the activity status information being shopping.

In Step 607, the CBUS server sends a request message for acquiring location information of the evaluation objects and the reference object to the location server, so as to request to acquire the location information of the user A and the group members selected in Step 506. The request message may adopt an implementation manner of HTTP POST.

In Step 608, the location server returns the location information to the CBUS server.

In Step 609, the CBUS server computes distances between the user A and the group members selected in Step 506 according to the received location information, acquires the group members within the range of 500 m away from the user A, respectively counts the number of persons satisfying the condition in the three groups, and acquires that the group having the largest number of persons satisfying the condition is sip:group2@example.com.

In Step 610, the CBUS server returns an evaluation result to the CBUS client. The returned message adopts the implementation manner of SIP NOTIFY.

In Step 611, the CBUS client returns a 200 OK response message corresponding to Step 510 to the CBUS server.

In this embodiment, the evaluation request message designates the reference object, the relative evaluation condition, the evaluation setting, and the evaluation objects. Firstly, the activity status information of the group members is acquired from the presence server, and the group members having the activity status being shopping are selected, then the location information of the user A and the group members having the activity being shopping is acquired from the location server, the distances from the user A are computed, and the number of persons satisfying the condition in each group is counted, so as to acquire the evaluation results. In this embodiment, an evaluation requestor does not need to designate a certain status of the evaluation object to satisfy a fixed value, such that the evaluation is performed according to a status of the reference object, and the evaluation is more flexible. Further, in this embodiment, the CBUS server supports a group selection function, and thus the application range of the evaluation method is expanded.

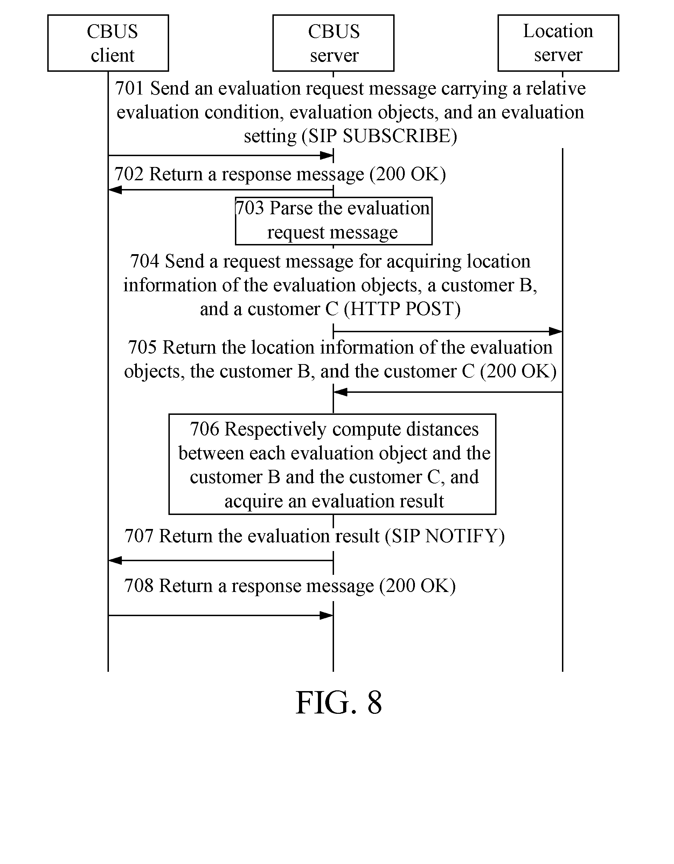

FIG. 8 is a signaling flow chart of a method for implementing relative condition evaluation according to embodiment eight of the present invention. In this embodiment, a user A intends to find colleagues having a geography location within a range of 500 m away from a customer B and a customer C through a CBUS service. It is assumed that SIP URIs of the customer B and the customer C are respectively sip:b@example.com and sip:c@example.com, a relative evaluation condition is that the geography location is within the range of 500 m away from the distance customer B and the customer C, an evaluation setting is once evaluation, and evaluation objects are colleagues of the user A, in which SIP URIs of the colleagues of the user A are respectively sip:f1@example.com, sip:f2@example.com, ..., and sip:fn@example.com. Referring to FIG. 8, the method of this embodiment includes the following steps.

In Step 701, the user A sends an evaluation request message to a CBUS server through a CBUS client on a terminal. The evaluation request message includes a relative evaluation condition, an evaluation setting, and evaluation objects, in which the relative evaluation condition designates that the reference objects are the customer B and the customer C.

A message body of the evaluation request message is as shown in the following.

```
      <?xml version="1.0" encoding="UTF-8"?> "representing xml declaration"
      <cbus_req xmlns="urn:oma:xml:cbus"
        xmlns:cr="urn:ietf:params:xml:ns:common-policy">
       "representing the following is the information related to the evaluation request"
        <cr:rule id="ck81 ">
           <cr:conditions> "representing the evaluation condition"
             <cr:identity> "representing the evaluation object"
               <cr:one id="sip:f1@example.com"/> "evaluation object 1"
               <cr:one id="sip:f2@example.com"/> "evaluation object 2"
               ...
               <cr:one id="sip:fn@example.com"/> "evaluation object n"
             </cr:identity>
             <focus> "representing the reference objects"
               <cr:one id="sip:b@example.com"/> "reference object 1"
               <cr:one id="sip:c@example.com"/> "reference object 2"
             </focus>
             <radius>500m</radius> "representing that the range is 500 m"
           </cr: conditions>
           <cr:actions> "representing the evaluation setting"
             <eva_type>once</eva_type> "representing once evaluation"
           </cr:actions>
           <cr:transformations> "representing the setting of the evaluation result"
             <provide-urilist>true</provide- urilist>
           "representing that the server is required to return the URI list"
           </cr:transformations>
        </cr:rule>
       </cbus_req>
```

An <identity> element in the message body is adapted to represent the evaluation object, a <focus> element is adapted to represent the reference object, and a value of a <provide-urilist> element is true, which is adapted to represent that the CBUS server is required to return the evaluation result in a URI list form.

In Step 702, the CBUS server receives the evaluation request message, and returns a 200 OK response message to the CBUS client.

In Step 703, the CBUS server parses the evaluation request message, and acquires the relative evaluation condition, the evaluation setting, the evaluation objects, and the reference objects.

In Step 704, the CBUS server sends a request message for acquiring location information of the evaluation objects and the reference objects to the location server, so as to request to acquire the location information of the colleagues of the user A, the customer B, and the customer C. The request message may adopt an implementation manner of HTTP POST.

In Step 705, the location server returns the location information to the CBUS server.

In Step 706, the CBUS server respectively computes distance between each evaluation object (the colleague of the user A) and the customer B, and distance between each evaluation object and the customer C according to the received location information, and acquires that the evaluation object satisfying the relative evaluation condition is sip:f2@example.com.

In Step 707, the CBUS server returns the evaluation result to the CBUS client. The returned message may adopt an implementation manner of SIP NOTIFY.

In Step 708, the CBUS client returns a 200 OK response message corresponding to Step 510 to the CBUS server.

In this embodiment, the evaluation request message designates the plurality of reference objects, the relative evaluation condition, the evaluation setting, and the evaluation objects, the location information of the colleagues of the user A, the customer B, and the customer C is acquired from the location server, and the evaluation object satisfying the relative evaluation condition is acquired, so as to acquire the evaluation result. In this embodiment, the relative evaluation condition is the relative condition, and an evaluation requestor does not need to designate a certain status of the evaluation object to satisfy a fixed value, such that the evaluation is performed according to a status of the reference object, and the relative condition evaluation is more flexible. Further, the CBUS server in this embodiment supports the evaluation method with the plurality of reference objects, and different reference objects may be selected dynamically according to user or application setting, such that the setting of the relative evaluation condition becomes more flexible.

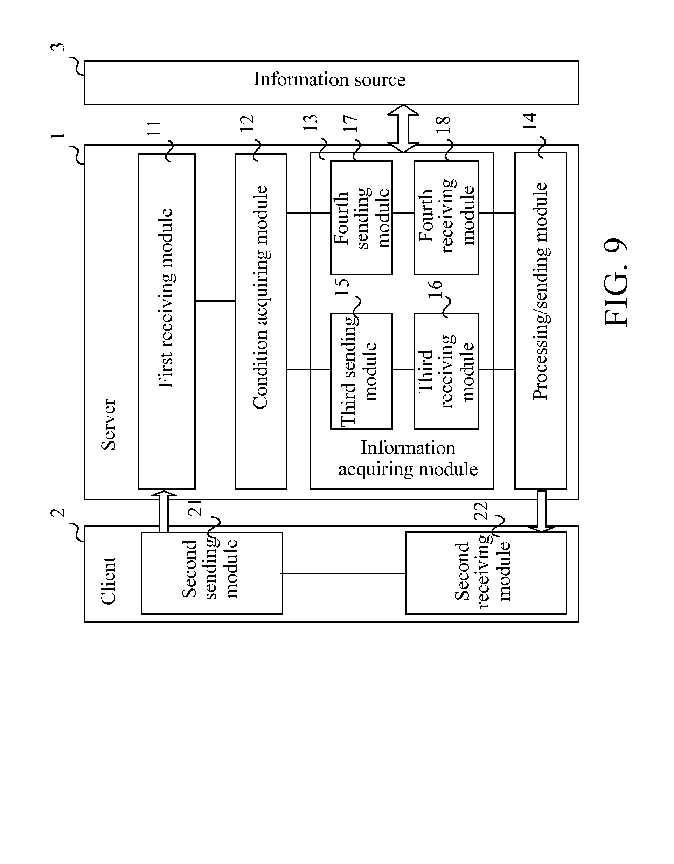

FIG. 9 is a schematic structural view of a system for implementing relative condition evaluation according to an embodiment of the present invention. Referring to FIG. 9, the system of this embodiment includes a server 1 and a client 2, and may further include an information source 3.

The client 2 initiates an evaluation request message to the server 1. The evaluation request message includes information related to relative condition evaluation, and the information related to relative condition evaluation includes a relative evaluation condition or reference path information. If the information related to relative condition evaluation includes evaluation objects, the server 1 acquires information related to a reference object and information related to the evaluation objects (the information related to the two is required information for relative condition evaluation) designated in the relative evaluation condition from the information source 3 according to the evaluation request message, compares the information related to the two, and acquires and sends evaluation results to the client 2. If the information related to relative condition evaluation does not include the evaluation objects, the server 1 sends a search request message carrying the reference object, and/or information related to the reference object, and the relative evaluation condition to the information source 3, the information source 3 searches for the evaluation objects satisfying the relative evaluation condition (that is, the required information for relative condition evaluation) according to the information related to the reference object, and sends the evaluation objects to the server 1, and the server 1 acquires the evaluation results according to the evaluation objects satisfying the relative evaluation condition, and sends the evaluation results to the client 2.

Further, as shown in FIG. 9, the client 2 in this embodiment may be any client in the clients in the embodiments of the present invention in the following, and the server 1 may be any server in the servers in the embodiments of the present invention in the following.

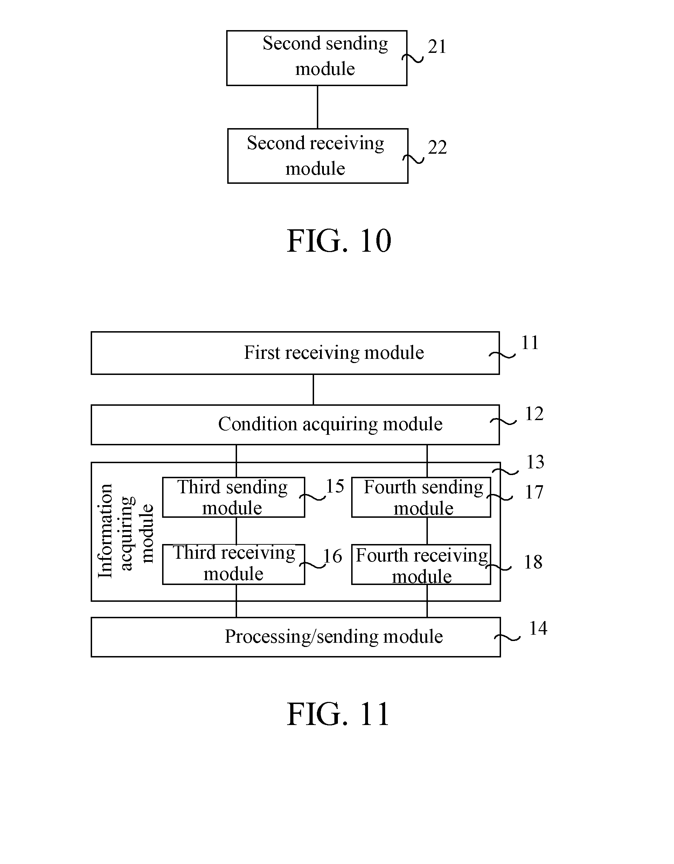

FIG. 10 is a schematic structural view of a client according to an embodiment of the present invention. Referring to FIG. 10, the client of this embodiment includes a second sending module 21 and a second receiving module 22. The second sending module 21 is adapted to send an evaluation request message. The second receiving module 22 is adapted to receive evaluation results returned by a server according to the evaluation request message. The evaluation request message includes information related to relative condition evaluation, the information related to relative condition evaluation includes a relative evaluation condition, and/or evaluation objects, and/or an evaluation setting, or includes reference path information, and the reference path information designates storage locations of the relative evaluation condition, and/or the evaluation objects, and/or the evaluation setting.

FIG. 11 is a schematic structural view of a server according to an embodiment of the present invention. Referring to FIG. 11, the server of this embodiment includes a first receiving module 11, a condition acquiring module 12, an information acquiring module 13, and a processing/sending module 14. The first receiving module 11 is adapted to receive an evaluation request message, in which the evaluation request message includes information related to relative condition evaluation. The condition acquiring module 12 is adapted to acquire a relative evaluation condition and a reference object in the relative evaluation condition according to the evaluation request message. The information acquiring module 13 is adapted to acquire required information for relative condition evaluation from a related information source according to the evaluation request message. The processing/sending module 14 is adapted to acquire evaluation results according to the required information for relative condition evaluation and send the evaluation results.

If the information related to relative condition evaluation includes the relative evaluation condition, the condition acquiring module 12 is further adapted to parse the evaluation request message, and acquire the relative evaluation condition and the reference object designated in the relative evaluation condition.

If the information related to relative condition evaluation is reference path information, the condition acquiring module 12 is further adapted to acquire the relative evaluation condition and the reference object in the relative evaluation condition from the storage location corresponding to the reference path information.

When the evaluation request message is parsed or the relative evaluation condition is acquired, the evaluation objects are further acquired. The information acquiring module 13 further includes a third sending module 15 and a third receiving module 16. The third sending module 15 is adapted to send a request message for acquiring information related to the evaluation objects and information related to the reference object to the information source 3. The third receiving module 16 is adapted to receive the information related to the evaluation objects and the information related to the reference object returned by the information source 3. The third sending module 15 and the third receiving module 16 are connected through communication, and definitely may also be connected through communication via the information source 3.

The processing/sending module 14 may be adapted to compare the information related to the evaluation objects with the information related to the reference object according to the relative evaluation condition, and acquire and send the evaluation results to the client.

Further, the information acquiring module 13 may also include a fourth sending module 17 and a fourth receiving module 18. The fourth sending module 17 is adapted to send a search request message carrying the reference object, and/or the information related to the reference object, and the relative evaluation condition to the information source 3, according to the acquired relative evaluation condition and the reference object designated in the relative evaluation condition. The fourth receiving module 18 is adapted to receive the evaluation objects satisfying the relative evaluation condition returned by the information source 3, in which the evaluation objects satisfying the relative evaluation condition are the required information for relative condition evaluation, and are also the evaluation results. The fourth sending module 17 is connected to the fourth receiving module 18 through communication, and definitely may also be connected through communication via the information source 3.

In the system for implementing relative condition evaluation, the client, and the server according to the embodiments of the present invention, the relative evaluation condition is acquired, in which the reference object is designated in the relative evaluation condition, such that the information related to the reference object serves as a basis for evaluation, the evaluation requestor does not need to designate a certain status of the evaluation object to satisfy a fixed value, and the evaluation is performed according to a status of the reference object.

Persons of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium that is capable of storing program codes, such as a ROM, a RAM, a magnetic disk, or an optical disk.

Finally, it should be noted that the above embodiments are merely provided for describing the technical solutions of the present invention, but not intended to limit the present invention. It should be understood by persons of ordinary skill in the art that although the present invention has been described in detail with reference to the foregoing embodiments, modifications can be made to the technical solutions described in the foregoing embodiments, or equivalent replacements can be made to some technical features in the technical solutions, as long as such modifications or replacements do not cause the essence of corresponding technical solutions to depart from the spirit and scope of the present invention.

## Claims

1. A method for implementing relative condition evaluation, comprising:
receiving an evaluation request message, wherein the evaluation request message comprises information related to relative condition evaluation;
acquiring a relative evaluation condition and a reference object in the relative evaluation condition according to the evaluation request message;
acquiring required information for relative condition evaluation from a related information source according to the evaluation request message; and
acquiring evaluation results according to the required information for relative condition evaluation and sending the evaluation results.

2. The method for implementing relative condition evaluation according to claim 1, wherein the information related to relative condition evaluation comprises the relative evaluation condition; and
the acquiring the relative evaluation condition and the reference object in the relative evaluation condition according to the evaluation request message comprises:
parsing the evaluation request message, and acquiring the relative evaluation condition and the reference object in the relative evaluation condition.

3. The method for implementing relative condition evaluation according to claim 1, wherein the information related to relative condition evaluation is reference path information; and
the acquiring the relative evaluation condition and the reference object in the relative evaluation condition according to the evaluation request message comprises:
acquiring the relative evaluation condition and the reference object designated in the relative evaluation condition from a storage location corresponding to the reference path information.

4. The method for implementing relative condition evaluation according to claim 2 or 3, wherein
the information related to relative condition evaluation further comprises evaluation objects; and the parsing the evaluation request message comprises acquiring the evaluation objects; or
acquiring the evaluation objects from the reference path information.

5. The method for implementing relative condition evaluation according to claim 4, wherein the acquiring the required information for relative condition evaluation from the related information source comprises:
sending a request message for acquiring information related to the evaluation objects and the reference object to the related information source; and
receiving the information related to the evaluation objects and the reference object returned by the related information source.

6. The method for implementing relative condition evaluation according to claim 5, wherein the request message for acquiring the information related to the evaluation objects and the reference object sent to the related information source carries identity information of an evaluation request initiator; and
after the sending the request message for acquiring the information related to the evaluation objects and the reference object to the related information source, the method further comprises: performing, by the related information source, identity verification on the evaluation request initiator according to the identity information of the evaluation request initiator.

7. The method for implementing relative condition evaluation according to claim 1, wherein
the required information for relative condition evaluation is acquired from the same information source; or
the required information for relative condition evaluation is acquired from different information sources.

8. The method for implementing relative condition evaluation according to claim 4, wherein
the required information for relative condition evaluation comprises information related to the evaluation objects and information related to the reference object; and
the acquiring and sending the evaluation results according to the required information for relative condition evaluation comprises:
comparing the information related to the evaluation objects with the information related to the reference object according to the relative evaluation condition, and acquiring and sending the evaluation results.

9. The method for implementing relative condition evaluation according to claim 8, wherein the relative evaluation condition comprises a first evaluation condition and a second evaluation condition; and
the acquiring and sending the evaluation results according to the required information for relative condition evaluation comprises:
comparing the information related to the evaluation objects with the information related to the reference object according to the first evaluation condition, and acquiring a first evaluation object satisfying the first evaluation condition;
acquiring information related to the first evaluation object from the related information source;
comparing the information related to the first evaluation object with a fixed value designated in the second evaluation condition, and acquiring a second evaluation object satisfying the second evaluation condition; and
sending the second evaluation object as the evaluation result.

10. The method for implementing relative condition evaluation according to claim 4, wherein if the evaluation objects are a group,
information related to the evaluation objects is information related to group members; and
the acquiring the evaluation results according to the required information for relative condition evaluation and sending the evaluation results comprises:
comparing the information related to the group members with the information related to the reference object according to the relative evaluation condition, counting the group members satisfying the relative evaluation condition in the group, and acquiring and sending the evaluation results.

11. The method for implementing relative condition evaluation according to claim 1, wherein the acquiring the required information for relative condition evaluation from the related information source comprises:
sending a search request message carrying the relative evaluation condition and the reference object to the related information source, such that the related information source queries information related to the reference object according to the search request, and searching for a evaluation object satisfying the relative evaluation condition according to the relative evaluation condition and the information related to the reference object; and
receiving the evaluation object satisfying the relative evaluation condition returned by the related information source.

12. The method for implementing relative condition evaluation according to claim 1, wherein the related information source comprises a first information source and a second information source; and
the acquiring the required information for relative condition evaluation from the related information source comprises:
acquiring information related to the reference object from the first information source;
sending a search request message carrying the relative evaluation condition and the information related to the reference object to the second information source, such that the second information source searches for evaluation objects satisfying the relative evaluation condition according to the relative evaluation condition and the information related to the reference object; and
receiving the evaluation objects satisfying the relative evaluation condition returned by the second information source.

13. The method for implementing relative condition evaluation according to claim 1, wherein the relative evaluation condition comprises a first evaluation condition and a second evaluation condition; and
the acquiring the required information for relative condition evaluation from the related information source comprises:
sending a search request message carrying the first evaluation condition and the reference object to the related information source, such that the related information source queries information related to the reference object according to the search request, and searches for a first evaluation object satisfying the first evaluation condition according to the first evaluation condition and the information related to the reference object; and
receiving the first evaluation object.

14. The method for implementing relative condition evaluation according to claim 13, wherein the related information source comprises a first information source and a second information source; and
the acquiring the required information for relative condition evaluation from the related information source comprises:
acquiring information related to the reference object from the first information source;
sending a search request message carrying a first evaluation condition and the information related to the reference object to the second information source, such that the second information source searches for a first evaluation object satisfying the first evaluation condition according to the first evaluation condition and the information related to the reference object; and
receiving the first evaluation object satisfying the first evaluation condition returned by the second information source.

15. The method for implementing relative condition evaluation according to claim 13 or 14, wherein
the acquiring the evaluation results according to the required information for relative condition evaluation and sending the evaluation results comprises:
comparing information related to the first evaluation object with a fixed value designated in the second evaluation condition, and acquiring a second evaluation object satisfying the second evaluation condition; and
sending the second evaluation object as the evaluation result.

16. The method for implementing relative condition evaluation according to claim 1, 2, or 3, wherein the relative evaluation condition comprises an upper limit and a lower limit of the number of the evaluation results; and
the acquiring the evaluation results further comprises:
continuing, by a server, to perform the evaluation, when the number of the evaluation results is lower than the lower limit, until the number of the evaluation results reaches the lower limit, and returning the evaluation results; and
returning, by the server, the evaluation results in multiple times, when the number of the evaluation results is higher than the upper limit, wherein the number of the returned evaluation results each time is not higher than the upper limit.

17. The method for implementing relative condition evaluation according to claim 1, 2, or 3, wherein the reference object is an evaluation request initiator or a user designated by the evaluation request initiator; or
the number of the reference object is one or more; or
during the evaluation procedure, the reference object is fixed, or during the evaluation procedure, the different reference objects are dynamically selected according to a pre-setting.

18. The method for implementing relative condition evaluation according to claim 2 or 3, wherein the information related to relative condition evaluation further comprises an evaluation setting; and
the evaluation setting comprises once evaluation, realtime evaluation, or end evaluation.

19. The method for implementing relative condition evaluation according to claim 1, 2, or 3, wherein the evaluation request message is received through a policy evaluation, enforcement and management (PEEM) callable interface (PEM-1); and the evaluation results are sent through the PEM-1 interface.

20. The method for implementing relative condition evaluation according to claim 1, wherein evaluation objects are acquired when the relative evaluation condition is acquired;
the acquiring the required information for relative condition evaluation from the related information source comprises: acquiring information related to the evaluation objects and information related to the reference object from the related information source; and
the acquiring and returning the evaluation results according to the required information for relative condition evaluation comprises: comparing the information related to the evaluation objects with the information related to the reference object according to the relative evaluation condition, and acquiring and returning the evaluation results.

21. A system for implementing relative condition evaluation, comprising:
a client, adapted to send an evaluation request message, and receive evaluation results returned by a server according to the evaluation request message, wherein the evaluation request message comprises information related to relative condition evaluation, and the information related to relative condition evaluation comprises a relative evaluation condition or comprises reference path information; and
a server, adapted to acquire the relative evaluation condition and a reference object in the relative evaluation condition according to the received evaluation request message, acquire required information for relative condition evaluation from a related information source; and acquire the evaluation results according to the required information for relative condition evaluation and send the evaluation results to the client.

22. The system for implementing relative condition evaluation according to claim 21, further comprising: an information source, adapted to provide information related to evaluation objects and information related to the reference object designated in the relative evaluation condition, and search for the evaluation objects satisfying the relative evaluation condition.

23. A client, comprising:
a second sending module, adapted to send an evaluation request message to a server, wherein the evaluation request message comprises information related to relative condition evaluation, and the information related to relative condition evaluation comprises a relative evaluation condition or reference path information; and
a second receiving module, adapted to receive evaluation results returned by the server according to the evaluation request message.

24. A server, comprising:
a first receiving module, adapted to receive an evaluation request message, wherein the evaluation request message comprises information related to relative condition evaluation;
a condition acquiring module, adapted to acquire a relative evaluation condition and a reference object in the relative evaluation condition according to the evaluation request message;
an information acquiring module, adapted to acquire required information for relative condition evaluation from a related information source according to the evaluation request message; and
a processing/sending module, adapted to acquire evaluation results according to the required information for relative condition evaluation and send the evaluation results.

25. The server according to claim 24, wherein
the information acquiring module further comprises:
a third sending module, adapted to send a request message for acquiring information related to evaluation objects and information related to the reference object to the related information source; and
a third receiving module, adapted to receive the information related to the evaluation objects and the information related to the reference object returned by the related information source; and
the processing/sending module compares the information related to the evaluation objects with the information related to the reference object according to the relative evaluation condition, and acquires and sends the evaluation results.

26. The server according to claim 24, wherein the information acquiring module further comprises:
a fourth sending module, adapted to send a search request message carrying the reference object and/or the information related to the reference object and the relative evaluation condition to the related information source, according to the acquired relative evaluation condition and the reference object designated in the relative evaluation condition; and a fourth receiving module, adapted to receive the evaluation objects satisfying the relative evaluation condition returned by the related information source, wherein the evaluation objects satisfying the relative evaluation condition are the required information for relative condition evaluation.
